# EUROPEAN PATENT SPECIFICATION

(11) **EP 4 666 343 B1**
(45) Date of publication and mention of the grant of the patent: **11.11.2026**
(21) Application number: 23705993.6
(22) Date of filing: 16.02.2023
(51) Int. Cl.: H01M 50/293, H01M 50/249, H01M 50/213, H01M 50/218, H01M 50/229, H01M 50/242, C08L 83/04, C08G 77/12, C08G 77/20

(54) **BATTERY MODULE, METHOD OF MANUFACTURING THE SAME AND CURABLE RESIN COMPOSITION INCLUDED IN BATTERY MODULE**
BATTERIEMODUL, VERFAHREN ZUR HERSTELLUNG DAVON UND HÄRTBARE HARZZUSAMMENSETZUNG IN DEM BATTERIEMODUL
MODULE DE BATTERIE, PROCÉDÉ DE FABRICATION ET COMPOSITION DE RÉSINE DURCISSABLE CONTENUE DANS UN MODULE DE BATTERIE

(43) Date of publication of application: 24.12.2025
(73) Proprietor: Wacker Chemie AG, 81671 München (DE)
(72) Inventor: KIM, Ha Nee, Seongnam-si Gyeonggi-do 13494 (KR); KANG, Doo Jin, Seongnam-si Gyeonggi-do 13494 (KR)
(74) Representative: Mieskes, Klaus Theoderich
(86) International application number: PCT/EP2023/053855
(87) International publication number: WO 2024/170082

(56) References cited:
- WO-A1-2022/170456
- JP-A- 2003 278 083
- US-A1- 2018 223 070
- US-A1- 2020 181 408

## Description

### [Technical Field]

The present invention relates to a battery module, a method of manufacturing the same, and a curable resin composition included in the battery module.

### [Background Art]

Secondary batteries that are easy to apply according to product groups and have electrical characteristics such as high energy density are universally applied to not only portable devices, but also electric vehicles (EVs) or hybrid vehicles (HEVs) driven by electric driving sources, etc. These secondary batteries are attracting attention as a new energy source for improving eco-friendliness and energy efficiency in that they do not generate any by-products from the use of energy as well as the primary advantage of dramatically reducing the use of fossil fuels.

The types of secondary batteries currently widely used include a lithium-ion battery, a lithium polymer battery, a nickel-cadmium battery, a nickel hydride battery, a nickel-zinc battery, and the like. The operating voltage of the unit secondary battery cell, i.e., a unit battery cell, is about 2.5 V to 4.5 V. Accordingly, when a higher output voltage is required, a plurality of battery cells are connected in series to form a battery pack. In addition, a plurality of battery cells may be connected in parallel to form a battery pack according to the charge/discharge capacity required for the battery pack. Accordingly, the number of battery cells included in the battery pack may be variously set according to a required output voltage or charge/discharge capacity.

Meanwhile, when configuring a battery pack by connecting a plurality of battery cells in series/parallel, it is general that a battery module including at least one battery cell is first configured, and other components are added using the battery module.

Existing battery modules including battery cells composed of cylindrical cells generally include a plurality of cylindrical cells stacked on each other, a bus bar member electrically connecting the plural cylindrical cells to each other, and a module case for accommodating various electronic components constituting the bus bar member, the cylindrical cells and the battery module.

However, in the case of the existing battery modules, a predetermined gap between the cells is generated depending on the structural shape of the cylindrical cells, and when an external shock occurs, the flow between the battery cells is frequently made, so that there is a risk of damage to the battery cells.

Therefore, there is a demand for a method for providing a battery module capable of more stably supporting battery cells and of preventing damage to battery cells due to external impact, and providing a battery pack and vehicle including the battery module.

### Relevant prior art documents:

D1 WO 2022/170456
D2 US 2020/181408
D3 JP 2003 278083
D4 US 2018/223070

D1 describes compositions comprising two polysiloxanes, which may be used as sealants for electronic components and which may include fillers. D2 and D3 describes curable polysiloxane compositions. D4 refers to battery casing comprising battery cells and a silicon foam filling part of the casing and comprising hollow glass beads and curable polysiloxanes.

### [Disclosure]

### [Technical Problem]

Therefore, the present invention has been made in view of the above problems, and it is one object of the present invention to provide a battery module that has an improved production rate and can efficiently protect battery cells and a method of manufacturing the battery module and a curable resin composition to be included in the battery module.

### [Technical Solution]

The invention is set out in the appended set of claims.

### [Advantageous effects]

A method of manufacturing a battery module according to an embodiment includes a step of injecting and filling in a curable resin composition in a case; and a step of curing a portion of the curable resin composition to form capping parts.

Accordingly, the method of manufacturing a battery module according to an embodiment can reduce a time required for curing the curable resin composition. That is, the method of manufacturing a battery module according to an embodiment can cure the remaining curable resin composition after a process of forming capping parts.

In particular, the curable resin composition has a high curing rate at a high temperature. Accordingly, the curable resin composition in an open portion of the case can be rapidly cured under a high-temperature condition. Therefore, the method of manufacturing a battery module according to an embodiment can solidly and rapidly form the capping parts.

In addition, since the curable resin composition has an appropriate curing rate at room temperature, the curable resin composition can be filled in the case without gaps. That is, the curable resin composition can be filled uniformly as a whole without an unfilled space.

Therefore, the method of manufacturing a battery module according to an embodiment can prevent the curable resin composition from flowing out even if the curable resin composition is not completely cured. In addition, the method of manufacturing a battery module according to an embodiment can prevent the curable resin composition from being separated from a desired position.

In addition, the curable resin composition has a low curing rate at room temperature. Accordingly, an increase in the viscosity of the curable resin composition can be minimized until a two-component composition is mixed and then injected. Therefore, the method of manufacturing a battery module according to an embodiment can shorten the injection time of the curable resin composition. In addition, the method of manufacturing a battery module according to an embodiment can inject the curable resin composition to a desired position in the case.

### [Description of Drawings]

FIG. 1 is a perspective view illustrating a battery module according to an embodiment.
FIG. 2 is an exploded perspective view illustrating a battery module according to an embodiment.
FIG. 3 is a plan view illustrating a top surface of a battery module according to an embodiment.
FIGS. 4 to 6 are sectional views illustrating a process of manufacturing a battery module according to an embodiment.
FIG. 7 is a diagram illustrating a battery pack.
FIG. 8 is a diagram illustrating a vehicle in which a battery pack is mounted.

### [Best Mode]

In the description of embodiments, in the case where it is described that each part, surface, layer or substrate is formed "on" or "under" each part, surface, layer or substrate, etc., "on" and "under" include both "directly" on or under another element and "indirectly" formed such that an intervening element is also present. In addition, criteria for "on" and "under" each element will be provided based on the drawings. The size of each component in the drawings may be exaggerated for explanation, and does not mean the size actually applied.

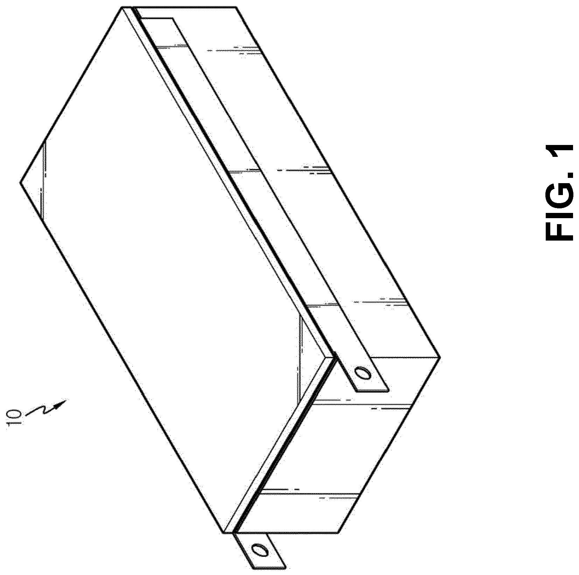

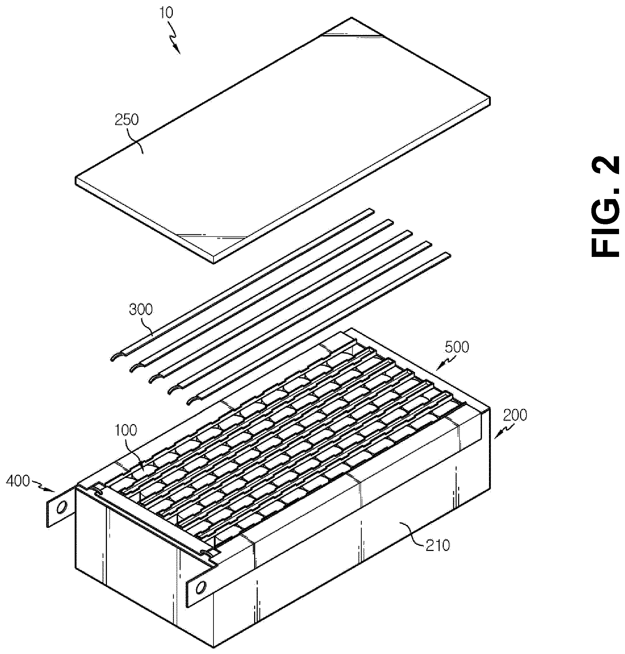

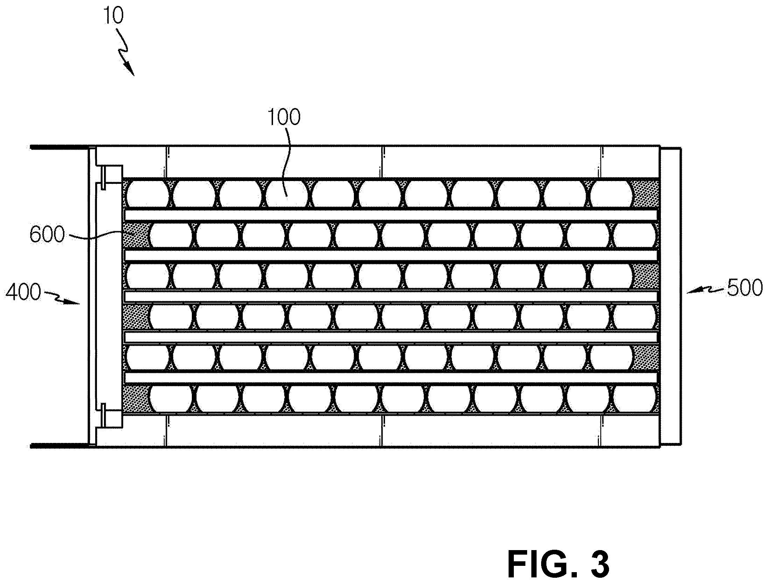

FIG. 1 is a perspective view illustrating a battery module according to an embodiment. FIG. 2 is an exploded perspective view illustrating a battery module according to an embodiment. FIG. 3 is a plan view illustrating a top surface of a battery module according to an embodiment.

Referring to FIGS. 1 to 3, the battery module according to an embodiment may include battery cells 100, a module case 200, bus bar members 300, a circuit board assembly 400, a support plate 500 and a buffer part 600.

The battery cells 100 are secondary batteries and may be pouch-type secondary batteries, prismatic secondary batteries, or cylindrical secondary batteries. The battery cells 100 may be cylindrical secondary batteries, i.e., cylindrical battery cells.

A plurality of battery cells 100 may be provided. The plural battery cells 100 may be accommodated in the module case 200 to be described below. The plural battery cells 100 may be laminated in the module case 200 to be described below along a horizontal direction of the module case 200.

The module case 200 may accommodate the battery cells 100 and various electronic components constituting a battery module 10. For this, the module case 200 may be provided with a predetermined accommodation space.

The module case 200 may include a case body 210 and a case cover 250.

The case body 210 includes the accommodation space therein, and may accommodate the plural battery cells 100, various electronic components constituting the battery module 10, and the like.

A plurality of cell insertion holes may be formed on an inner bottom surface of the case body 210. The plural cell insertion holes may be provided to correspond to the number of the plural battery cells 100.

Lower parts of the plural battery cells 100 may be inserted into the plural cell insertion holes. Accordingly, the plural battery cells 100 may be more stably accommodated in the module case 210.

In addition, an adhesive, etc. may be applied to the inside of the plural cell insertion holes. In this case, the plural battery cells 100 may be more stably fixed.

The case cover 250 forms an upper part of the module case 200, and may be coupled to the case body 210 to package the battery cells 100 inside the module case 200.

The bus bar members 300 may be provided in the upper part of the plural battery cells 100 and may electrically connect the plural battery cells 100 to each other. A plurality of bus bar members 300 may be provided, and the plural bus bar members 300 may be disposed to be spaced apart from each other by a predetermined distance.

The circuit board assembly 400 may be electrically connected to the plural bus bar members 300. The circuit board assembly 400 may sense the voltage, temperature, etc. of the battery cells 100. In addition, the circuit board assembly 400 may include a terminal for connecting to an external power source, etc., and may include a control board for managing the battery cells 100.

The support plate 500 may be disposed between the plural battery cells 100 and the plural bus bar members 300 and may support the plural bus bar members 300.

The buffer part 600 serves to prevent the flow of the plural battery cells 100 and may be filled in spaces between the plural battery cells 100 in the lower part of the support plate 500.

The buffer part 600 may include a composite material capable of filling a predetermined space. The buffer part 600 includes a silicone-based curable resin composition. The plural battery cells 100 provided and accommodated with the silicone-based curable resin composition may be more stably accommodated in the module case 230.

When manufacturing the battery module 10, the buffer part 600 may be filled inside the module case 200 through a dispenser unit D accommodating the buffer part 600.

As such, in this embodiment, the battery cells 100 may be more stably supported through the buffer part 600 and the flow of the battery cells 100 from external shocks may be more effectively prevented. Accordingly, in the present embodiment, the risk of damage to the battery cells 100 due to an external shock or the like may be significantly reduced.

FIGS. 3 to 6 are sectional view illustrating a process of manufacturing a battery module according to an embodiment.

To manufacture the buffer part, first, a silicone-based curable resin composition is prepared.

The silicone-based curable resin composition includes a first curable resin composition and a second curable resin composition. The first and the second curable resin composition are described in the independent claims.

The first curable resin composition includes a first organic polysiloxane.

The first organic polysiloxane may be represented by the following average composition formula (1):

R¹ₐSiO_{b} (1)

In the above Compositional Formula (1), R¹ represents one or more groups selected from the group consisting of a hydrogen atom, a hydroxy group, or a saturated or unsaturated monovalent hydrocarbon group having 1 to 18 carbon atoms, and a may be about 1.8 to about 2.2. a+b may be about 3.5 to about 8.

In more detail, a+b may be 4.

In Compositional Formula (1), the saturated or unsaturated monovalent hydrocarbon group having 1 to 18 carbon atoms represented by R¹ may be, for example, an alkyl group such as a methyl group, an ethyl group, a propyl group, a hexyl group, an octyl group, a decyl group, a dodecyl group, a tetradecyl group, a hexadecyl group or an octadecyl group; a cycloalkyl group such as a cyclopentyl group or a cyclohexyl group; an alkenyl group such as a vinyl group or an allyl group; an aryl group such as a phenyl group or a tolyl group; an aralkyl group such as a 2-phenylethyl group or a 2-methyl-2-phenylethyl group; a halogenated hydrocarbon group such as a 3,3,3-trifluoropropyl group, a 2-(perfluorobutyl)ethyl group, a 2-(perfluorooctyl)ethyl group or a p-chlorophenyl group; or the like.

The first organic polysiloxane may have a weight average molecular weight (Mw) of about 100 g/mol to about 10000 g/mol. The first organic polysiloxane may have a weight average molecular weight of about 500 g/mol to about 7000 g/mol. The first organic polysiloxane may have a weight average molecular weight of about 700 g/mol to about 5000 g/mol. The first organic polysiloxane may have a weight average molecular weight of about 1000 to about 3000 g/mol. The weight average molecular weight may be measured based on polystyrene.

The first organic polysiloxane may have a kinematic viscosity of 10 mPa·s to 2000 mPa·s at 25° C. In the first organic polysiloxane, a kinematic viscosity at 25° C may be about 30 mPa·s to about 1500 mPa·s. The kinematic viscosity of the first organic polysiloxane may be a value at 25°C measured with an Ostwald viscometer.

Since the first organic polysiloxane has the weight average molecular weight and kinematic viscosity described above, the buffer part may have an appropriate bonding strength, an appropriate curing rate and an appropriate elasticity. In particular, since the first organic polysiloxane has the weight average molecular weight and kinematic viscosity described above, it may be easily injected between the secondary battery cells when forming the buffer part.

The first organic polysiloxane includes an alkenyl group bonded to a silicon atom, and at least two alkenyl groups may be included in one molecule of the first organic polysiloxane. 2 to 10 alkenyl groups may be included in one molecule of the first organic polysiloxane. 2 to 5 alkenyl groups may be included in one molecule of the first organic polysiloxane. 2 alkenyl groups may be included in one molecule of the first organic polysiloxane.

The first organic polysiloxane may be represented by the following average composition formula (2):

R¹ₐR²_{c}SiO_{b} (2)

In Compositional Formula (2), R¹ may be a hydrogen atom, a hydroxyl group or a saturated or unsaturated monovalent hydrocarbon group having 1 to 18 carbon atoms, and R² may be an alkenyl group. In Compositional Formula (2), a+c may be about 1.8 to about 2.2, and a+b+c may be about 3.5 to about 8. In Compositional Formula (2), a+b+c may be about 4. In Compositional Formula (2), a may be about 1.8 to about 2.2. In addition, c may be 0.0001 to 0.1.

The first organic polysiloxane may be represented by the following Chemical Formula (3): 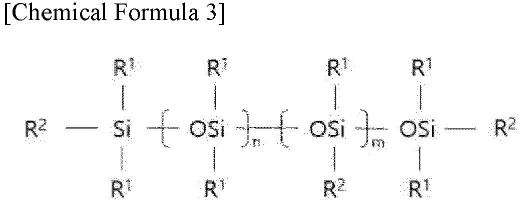 where R¹ may be a hydrogen atom, a hydroxyl group or a saturated or unsaturated monovalent hydrocarbon group having 1 to 18 carbon atoms, and R² may be an alkenyl group. In addition, in Chemical Formula 3, n may be 1 to 1500, and m may be 0 to 20. In Chemical Formula 3, n may be 10 to 1000, and m may be 0 to 20.

The first organic polysiloxane may be represented by the following Chemical Formula (4): 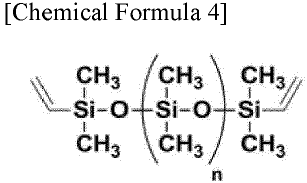 where n may be 1 to 1500. n may be 10 to 1000.

The first organic polysiloxane may have a weight average molecular weight (Mw) of about 100 g/mol to about 10000 g/mol. The first organic polysiloxane may have a weight average molecular weight of about 500 g/mol to about 7000 g/mol. The first organic polysiloxane may have a weight average molecular weight of about 700 g/mol to about 5000 g/mol. The first organic polysiloxane may have a weight average molecular weight of about 1000 to about 3000 g/mol. The weight average molecular weight may be measured based on polystyrene.

In the first organic polysiloxane, a kinematic viscosity at 23°C may be 10 mPa·s to 2000 mPa·s. In the first organic polysiloxane, a kinematic viscosity at 23°C may be about 30 mPa·s to about 1500 mPa·s. In the first organic polysiloxane, a kinematic viscosity at 23°C may be about 100 mPa·s to about 1000 mPa·s. The kinematic viscosity of the first organic polysiloxane may be a value at 23°C measured with an Ostwald viscometer.

The first organic polysiloxane may be included in a content of about 20 wt% to about 70 wt% in the first curable resin composition based on a total weight of the first curable resin composition. The first organic polysiloxane may be included in a content of about 25 wt% to about 65 wt% in the first curable resin composition based on a total weight of the first curable resin composition. The first organic polysiloxane may be included in a content of about 30 wt% to about 60 wt% in the first curable resin composition based on a total weight of the first curable resin composition.

The first curable resin composition may further include a high-viscosity organic polysiloxane.

The high-viscosity organic polysiloxane may be represented by Compositional Formula (1), Compositional Formula (2), Chemical Formula 3 or Chemical Formula 4.

The high-viscosity organic polysiloxane may have a viscosity of about 10000 mPa·s to 100000 mPa·s. The high-viscosity organic polysiloxane may have a viscosity of about 20000 mPa·s to 70000 mPa·s.

The high-viscosity organic polysiloxane may be included in a content of about 2 parts by weight to about 15 parts by weight in the first curable resin composition based on 100 parts by weight of the first organic polysiloxane. The high-viscosity organic polysiloxane may be included in a content of about 3 parts by weight to about 13 parts by weight in the first curable resin composition based on 100 parts by weight of the first organic polysiloxane. The high-viscosity organic polysiloxane may be included in a content of about 4 parts by weight to about 10 parts by weight in the first curable resin composition based on 100 parts by weight of the first organic polysiloxane.

The first curable resin composition may further include a chain extender.

The chain extender may include a hydrogen group bonded to a silicon atom. The number of hydrogen groups may be 1 to 10 per molecule of the chain extender. The number of hydrogen groups may be 2 to 10 per molecule of the chain extender. The number of hydrogen groups may be 2 to 5 per molecule of the chain extender. The number of hydrogen groups may be 2 per molecule of the chain extender.

The chain extender may be represented by the following Chemical Formula 5: 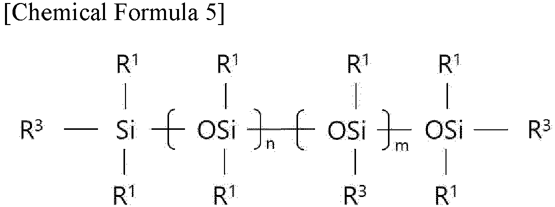 where R¹ may be a hydrogen atom, a hydroxyl group or a saturated or unsaturated monovalent hydrocarbon group having 1 to 18 carbon atoms, and R³ may be a hydrogen atom. In addition, in Chemical Formula 5, n may be 1 to 1500, and m may be 0 to 20. In Chemical Formula 5, n may be 10 to 1000, and m may be 0 to 20. In Chemical Formula 5, n may be 1 to 1500, and m may be 0.

The chain extender may be represented by the following Chemical Formula 6:

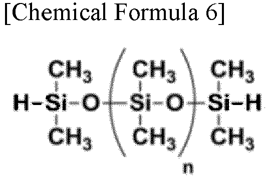

The chain extender may have a viscosity of about 20 mPa·s to about 500 mPa·s at about 23°C. The chain extender may have a viscosity of about 30 mPa·s to about 400 mPa·s at about 23°C. The chain extender may have a viscosity of about 40 mPa·s to about 350 mPa·s at about 23°C.

The chain extender may be included in a content of about 50 parts by weight to about 300 parts by weight in the first curable resin composition based on 100 parts by weight of the first organic polysiloxane. The chain extender may be included in a content of about 70 parts by weight to about 250 parts by weight in the first curable resin composition based on 100 parts by weight of the first organic polysiloxane. The chain extender may be included in a content of about 80 parts by weight to about 200 parts by weight in the first curable resin composition based on 100 parts by weight of the first organic polysiloxane.

The first curable resin composition may further include a crosslinking agent.

The crosslinking agent may be represented by the following Chemical Formula 7:

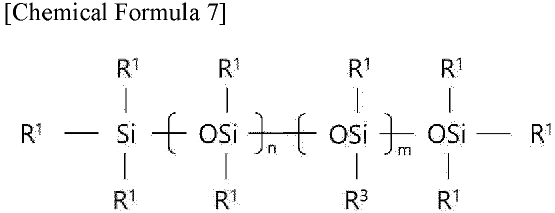

In Chemical Formula 7, R¹ may be a hydrogen atom, a hydroxyl group or a saturated or unsaturated monovalent hydrocarbon group having 1 to 18 carbon atoms, and R³ may be a hydrogen atom. In addition, in Chemical Formula 7, n may be 1 to 1500, and m may be 1 to 500. In Chemical Formula 7, n may be 10 to 1000, and m may be 1 to 100.

The crosslinking agent may be represented by the following Chemical Formula 8:

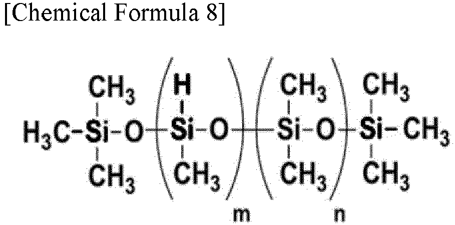

In Chemical Formula 8, n may be 1 to 1500, and m may be 1 to 500. In Chemical Formula 8, n may be 10 to 1000, and m may be 1 to 100.

The crosslinking agent may have a viscosity of about 10 mPa·s to about 1000 mPa·s at about 23°C. The crosslinking agent may have a viscosity of about 50 mPa·s to about 700 mPa·s at about 23°C. The crosslinking agent may have a viscosity of about 60 mPa·s to about 500 mPa·s at about 23°C.

The crosslinking agent may be included in a content of about 2 parts by weight to about 10 parts by weight in the first curable resin composition based on 100 parts by weight of the first organic polysiloxane. The crosslinking agent may be included in a content of about 3 parts by weight to about 8 parts by weight in the first curable resin composition based on 100 parts by weight of the first organic polysiloxane. The crosslinking agent may be included in a content of about 4 parts by weight to about 7 parts by weight in the first curable resin composition based on 100 parts by weight of the first organic polysiloxane.

The first curable resin composition may further include a hollow filler.

The hollow filler may include a hollow inorganic filler. The hollow filler may include glass. The hollow filler may include borosilicate glass.

The hollow filler may have an average particle diameter (D50) of about 10 *µ*m to about 100 *µ*m. The hollow filler may have an average particle diameter (D50) of about 15 *µ*m to about 100 *µ*m. The hollow filler may have an average particle diameter (D50) of about 20 *µ*m to about 90 *µ*m.

The hollow filler may have a specific surface area of about 1.9 m²/g to about 2.7 m²/g.

The hollow filler may have a collapse pressure under which 10% by volume collapses. The collapse pressure of the hollow filler may be about 250 psi to about 27000 psi.

The hollow filler may have a softening temperature of about 500°C to about 700°C.

The hollow filler may have a thermal conductivity of about 0.05 W/m·K to about 0.20 W/m·K.

The hollow filler may have a true density of about 0.125 g/cm³ to about 0.60 g/cm³.

The term "true density" denotes a quotient obtained by dividing the mass of the hollow filler sample by the true volume of the mass of the hollow filler, when measured by a gas pycnometer. The "true volume" denotes a total volume of the hollow filler, not the bulk volume.

The first curable resin composition may further include an additive.

The additive may be at least one selected from the group consisting of a pigment, a dye, a clay, a surfactant, an oil, wollastonite, and fumed silica.

The "dye" means only a colored or fluorescent organic material, which imparts color to a substrate by selective absorption of light. The "pigment" generally means a colored, black, white or fluorescent particulate organic or inorganic solid that is insoluble in a vehicle or substrate into which it is incorporated and that is essentially unaffected by physical and chemical effects. The appearance of pigment is changed by selective absorption and/or scattering of light. A pigment generally retains the crystalline or particulate structure thereof throughout a coloring process. A pigment and a dye are well known in the art and need not be described in detail herein.

The clay may be a silicate containing a cation that may be selected from calcium, magnesium, aluminum, sodium, potassium and lithium cations, and mixtures thereof.

The surfactant may be a silicone polyether surfactant.

The oil may be castor oil. The oil may function as a rheology modifier.

The wollastonite is also known as calcium metasilicate, is a naturally occurring mineral, and may be added as a flame retardant.

The fumed silica may also be used as an additive to modify the rheology of these materials. The fumed silica may be obtained by high-temperature pyrolysis of volatile silicon compounds in an oxyhydrogen flame to produce finely divided silica.

The additive may be included in a content of about 2 parts by weight to about 10 parts by weight in the first curable resin composition based on 100 parts by weight of the first organic polysiloxane. The additive may be included in a content of about 3 parts by weight to about 8 parts by weight in the first curable resin composition based on 100 parts by weight of the first organic polysiloxane.

The silicone-based resin composition includes the second curable resin composition.

The second curable resin composition includes a second organic polysiloxane.

The second organic polysiloxane may be represented by Compositional Formula (1).

The second organic polysiloxane may be represented by Compositional Formula (2).

The second organic polysiloxane may be represented by Chemical Formula 3.

The second organic polysiloxane may be represented by Chemical Formula 4.

The second organic polysiloxane may be substantially the same as the first organic polysiloxane.

The second organic polysiloxane may be included in a content of about 70 wt% to about 95 wt% in the second curable resin composition based on the total weight of the second curable resin composition. The second organic polysiloxane may be included in a content of about 75 wt% to about 95 wt% in the second curable resin composition based on the total weight of the second curable resin composition. The second organic polysiloxane may be included in a content of about 80 wt% to about 95 wt% in the second curable resin composition based on the total weight of the second curable resin composition.

The second curable resin composition includes a curing catalyst. The curing catalyst accelerates curing of the silicone-based resin composition.

The curing catalyst may include a platinum-based catalyst.

Examples of the curing catalyst includes organic titanate esters such as a platinum-divinyltetramethyldisiloxane complex, tetrabutyl titanate and tetraisopropyl titanate; organic titanium chelate compounds such as diisopropoxybis(acetylacetate)titanium and diisopropoxybis(ethylacetoacetate)titanium; organoaluminum compounds such as aluminum tris(acetylacetonate) and aluminum tris(ethylacetoacetate); organic zirconium compounds such as zirconium tetra(acetylacetonate) and zirconium tetrabutylate; organotin compounds such as dibutyltin dioctoate, dibutyltin dilaurate, and butyltin-2-ethylhexoate; metal salts of organic carboxylic acids such as tin naphthenate, tin oleate, tin butyrate, cobalt naphthenate, and zinc stearate; amine compounds and salts thereof, such as hexylamine and dodecylamine phosphate; quaternary ammonium salts such as benzyltriethylammonium acetate; lower fatty acid salts of alkali metals such as potassium acetate; dialkyl hydroxylamines such as dimethylhydroxylamine and diethylhydroxylamine; and guanidyl group-containing organosilicon compounds.

The second curable resin composition may include the curing catalyst in a content of about 0.01 parts by weight to about 5 parts by weight based on 100 parts by weight of the second organic polysiloxane. The second curable resin composition may include the curing catalyst in a content of about 0.03 parts by weight to about 3 parts by weight based on 100 parts by weight of the second organic polysiloxane. The second curable resin composition may include the curing catalyst in a content of about 0.1 parts by weight to about 2 parts by weight based on 100 parts by weight of the second organic polysiloxane.

The second curable resin composition may further include a reaction inhibitor. The reaction inhibitor may include at least one selected from the group consisting of acetylenic compounds such as 2-methyl-3-butyn-2-ol, 2-phenyl-3-butyn-2-ol, and 1-ethynyl-1-cyclohexanol; ene-yne compounds such as 3-methyl-3-pentene-1-yne and 3,5-dimethyl-3-hexen-1-yne; and curing reaction inhibitors such as a hydrazine-based compound, a phosphine-based compound, and a mercaptan-based compound.

The content of the reaction inhibitor may be about 0.0001 to about 10 parts by mass based on 100 parts by mass of the second organic polysiloxane.

The second curable resin composition may further include the hollow filler.

That is, the hollow filler may be included in the first curable resin composition, may be included in the second curable resin composition, or may be included in both the first curable resin composition and the second curable resin composition.

The second curable resin composition may include the hollow filler in a content of about 3 parts by weight to about 20 parts by weight based on 100 parts by weight of the second organic polysiloxane. The second curable resin composition may include the hollow filler in a content of about 5 parts by weight to about 15 parts by weight based on 100 parts by weight of the second organic polysiloxane. The second curable resin composition may include the hollow filler in a content of about 6 parts by weight to about 14 parts by weight based on 100 parts by weight of the second organic polysiloxane.

The second curable resin composition may further include the additive. The second curable resin composition may include the additive in a content of about 0.1 parts by weight to about 5 parts by weight based on 100 parts by weight of the second organic polysiloxane.

The silicone-based resin composition may be prepared by a conventionally known silicone composition preparation method, and is not particularly limited.

The silicone-based resin composition may be prepared by mixing the first curable resin composition and the second curable resin composition.

In the silicone-based resin composition, a weight ratio of the first curable resin composition to the second curable resin composition may be about 0.5:1 to about 1:0.5. In the silicone-based resin composition, a weight ratio of the first curable resin composition to the second curable resin composition may be about 0.7:1 to about 1:0.7. In the silicone-based resin composition, a weight ratio of the first curable resin composition to the second curable resin composition may be about 0.8:1 to about 1:0.8.

For example, the silicone-based resin composition may be prepared by mixing the first curable resin composition and the second curable resin composition for 30 minutes to 4 hours using a mixer such as Trimix, Twin Mix, and Planetary Mixer (all are manufactured by Inoue Seisakusho Co., Ltd., registered trademarks), Ultra Mixer (manufactured by Mizuho Kogyo Co., Ltd., registered trademark), or Hibis Disper Mix (manufactured by Primix Co., Ltd., registered trademark). The temperature of the mixing process may be room temperature.

The silicone-based resin composition may include the hollow filler in a content of about 5 wt% to about 20 wt% based on the total weight. The silicone-based resin composition may include the hollow filler in a content of about 6 wt% to about 15 wt% based on the total weight. The silicone-based resin composition may include the hollow filler in a content of about 7 wt% to about 13 wt% based on the total weight.

The silicone-based resin composition may include the first organic polysiloxane and the second organic polysiloxane in a content of about 50 wt% to about 80 wt% based on the total weight. The silicone-based resin composition may include the first organic polysiloxane and the second organic polysiloxane in a content of about 55 wt% to about 75 wt% based on the total weight. The silicone-based resin composition may include the first organic polysiloxane and the second organic polysiloxane in a content of about 60 wt% to about 75 wt% based on the total weight.

The silicone-based resin composition may include the high-viscosity organic polysiloxane in a content of about 0.3 wt% to about 7 wt%. The silicone-based resin composition may include the high-viscosity organic polysiloxane in a content of about 0.5 wt% to about 5 wt%. The silicone-based resin composition may include the high-viscosity organic polysiloxane in a content of about 0.6 wt% to about 4 wt%.

The silicone-based resin composition may include the crosslinking agent in a content of about 0.3 wt% to about 5 wt%. The silicone-based resin composition may include the crosslinking agent in a content of about 0.5 wt% to about 3 wt%. The silicone-based resin composition may include the crosslinking agent in a content of about 0.6 wt% to about 2 wt%.

The silicone-based resin composition may include the chain extender in a content of about 10 wt% to about 40 wt%. The silicone-based resin composition may include the chain extender in a content of about 15 wt% to about 35 wt%. The silicone-based resin composition may include the chain extender in a content of about 20 wt% to about 30 wt%.

In the silicone-based resin composition, a ratio of a total weight of the first organic polysiloxane and the second organic polysiloxane to a weight of the chain extender may be about 3:1 to about 1.5:1. In the silicone-based resin composition, a ratio of the total weight of the first organic polysiloxane and the second organic polysiloxane to the weight of the chain extender may be about 2.5:1 to about 1.6:1.

The silicone-based resin composition may include the additive in a content of about 0.3 wt% to about 5 wt%. The silicone-based resin composition may include the additive in a content of about 0.5 wt% to about 3 wt%. The silicone-based resin composition may include the additive in a content of about 0.6 wt% to about 2 wt%.

The silicone-based resin composition may include the curing catalyst in a content of about 0.01 wt% to about 1 wt%. The silicone-based resin composition may include the curing catalyst in a content of about 0.02 wt% to about 0.9 wt%. The silicone-based resin composition may include the curing catalyst in a content of about 0.03 wt% to about 0.8 wt%.

The silicone-based resin composition may include the reaction inhibitor in a content of about 0.01 wt% to about 1 wt%. The silicone-based resin composition may include the reaction inhibitor in a content of about 0.02 wt% to about 0.9 wt%. The silicone-based resin composition may include the reaction inhibitor in a content of about 0.03 wt% to about 0.8 wt%.

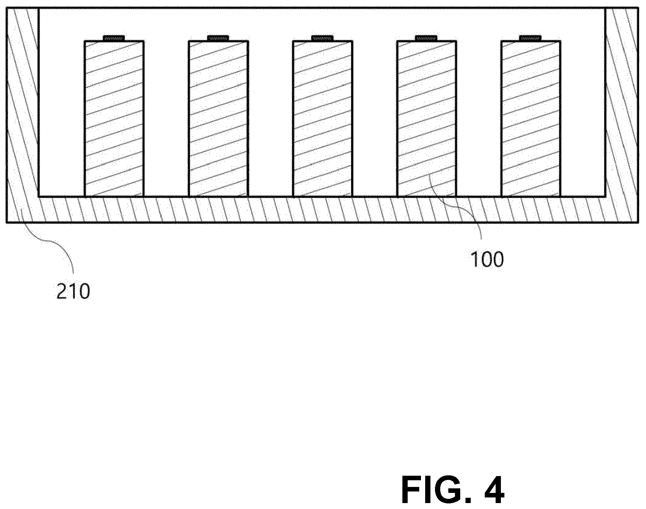

Referring to FIG. 4, the battery cells 100 are disposed in the case body 210. The battery cells may be disposed in a seating part.

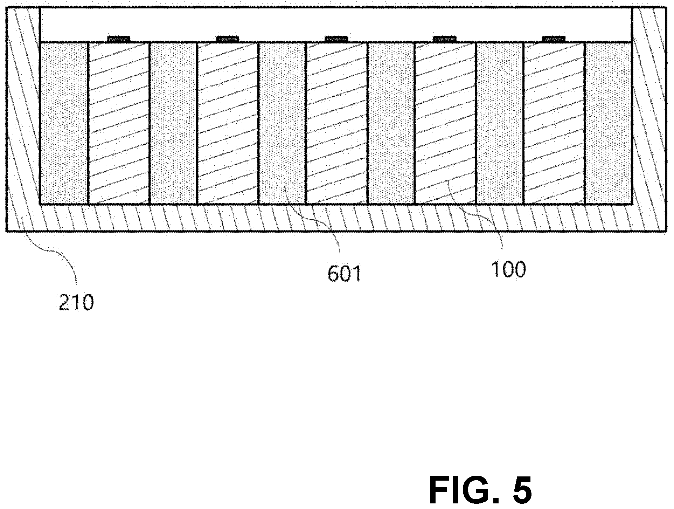

Referring to FIG. 5, the silicone-based resin composition 601 is injected between the battery cells 100 in the case body 210.

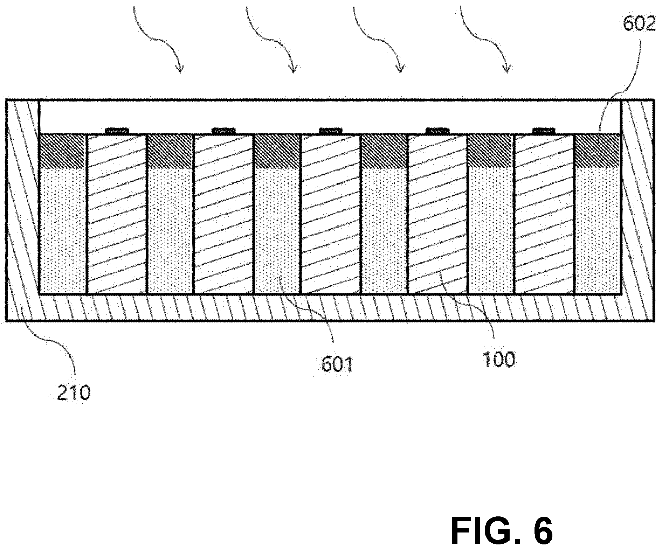

Referring to FIG. 6, heat is applied to the injected silicone-based resin composition 601. Heat may be applied to an upper part of the injected silicone-based resin composition. Accordingly, a portion of the injected silicone-based resin composition is cured or semi-cured to form capping parts 602. The capping parts 602 may be disposed on an uncured portion 601 of the injected silicone-based resin composition.

A curing temperature of the upper part of the injected silicone-based resin composition may be about 60°C to about 150°C. A curing time of the upper part of the injected silicone-based resin composition may be about 1 minute to about 10 minutes. Heat may be applied to the upper part of the injected silicone-based resin composition by an infrared heater.

The capping parts may be formed in an upper part of the case body. The capping parts may be formed in an upper part of the injected silicone-based resin composition on the basis of gravity.

The capping parts may be disposed between a height of about 0.5 and a height of about 1 from the bottom based on a total depth of the case body. The capping parts may be disposed between a height of about 0.8 and a height of about 1 from the bottom based on the total depth of the case body. The capping parts may be disposed between a height of about 0.9 and a height of about 1 from the bottom based on the total depth of the case body.

The capping parts may seal the inside of the case body. The capping parts may seal an uncured portion of the injected silicone-based resin composition. Accordingly, the capping parts may prevent an uncured portion of the injected silicone-based resin composition from eluting.

Next, the bus bar members 300, the circuit board assembly 400, the support plate 500 and the case cover are assembled to the case body and the battery cells.

Next, an uncured portion of the injected silicone-based resin composition may be cured at room temperature. Accordingly, the buffer part may be formed.

The silicone-based resin composition may have a first curing rate at about 23°C.

In the silicone-based resin composition, the first curing rate may be about 5 mPa·s/min to about 70 mPa·s/min. In the silicone-based resin composition, the first curing rate may be about 10 mPa·s/min to about 70 mPa·s/min. In the silicone-based resin composition, the first curing rate may be about 15 mPa·s/min to about 60 mPa·s/min.

The silicone-based resin composition may have a second curing rate at about 70°C.

In the silicone-based resin composition, the second curing rate may be about 400 mPa·s/min to about 2000 mPa·s/min. In the silicone-based resin composition, the second curing rate may be about 550 mPa·s/min to about 1900 mPa·s/min. In the silicone-based resin composition, the second curing rate may be about 500 mPa·s/min to about 1800 mPa·s/min.

In addition, the silicone-based resin composition may have a third curing rate at about 60°C.

In the silicone-based resin composition, the third curing rate may be about 100 mPa·s/min to about 1500 mPa·s/min. In the silicone-based resin composition, the third curing rate may be about 200 mPa·s/min to about 1200 mPa·s/min. In the silicone-based resin composition, the third curing rate may be about 250 mPa·s/min to about 1000 mPa·s/min.

In addition, the silicone-based resin composition may have a fourth curing rate at about 50°C.

In the silicone-based resin composition, the fourth curing rate may be about 70 mPa·s/min to about 1000 mPa·s/min. In the silicone-based resin composition, the fourth curing rate may be about 80 mPa·s/min to about 800 mPa·s/min. In the silicone-based resin composition, the fourth curing rate may be about 100 mPa·s/min to about 700 mPa·s/min.

At about 70°C, the silicone-based resin composition may have a viscosity of about 600 mPa·s to about 1100 mPa·s. At about 70°C, the silicone-based resin composition may have a viscosity of about 700 mPa·s to about 1000 mPa·s.

At about 60°C, the silicone-based resin composition may have a viscosity of about 650 mPa·s to about 1100 mPa·s. At about 60°C, the silicone-based resin composition may have a viscosity of about 750 mPa·s to about 1000 mPa·s.

At about 50°C, the silicone-based resin composition may have a viscosity of about 650 mPa·s to about 1100 mPa·s. At about 60°C, the silicone-based resin composition may have a viscosity of about 750 mPa·s to about 1000 mPa·s.

At about 23°C, the silicone-based resin composition may have a viscosity of about 750 mPa·s to about 1200 mPa·s. At about 60°C, the silicone-based resin composition may have a viscosity of about 850 mPa·s to about 1100 mPa·s.

A ratio of the first curing rate to the second curing rate may be about 1:10 to about 1:400. A ratio of the first curing rate to the second curing rate may be about 1:30 to about 1:200. A ratio of the first curing rate to the second curing rate may be about 1: 40 to about 1:200.

A ratio of the first curing rate to the third curing rate may be about 1:9 to about 1:300. A ratio of the first curing rate to the third curing rate may be about 1:25 to about 1: 150. A ratio of the first curing rate to the third curing rate may be about 1:20 to about 1:150.

A ratio of the first curing rate to the fourth curing rate may be about 1:8 to about 1:200. A ratio of the first curing rate to the fourth curing rate may be about 1:20 to about 1: 100. A ratio of the first curing rate to the fourth curing rate may be about 1:15 to about 1:100.

The first curing rate, the second curing rate, the third curing rate, and the fourth curing rate may be derived by measuring the viscosity of the silicone-based resin composition over time at about 23°C, about 70°C, about 60°C and about 50°C, respectively.

The first curing rate, the second curing rate, the third curing rate, and the fourth curing rate may be derived by measuring the viscosity of the silicone-based resin composition over time at an interval of about 10 seconds, at an interval of about 20 seconds, at an interval of about 30 seconds, at an interval of about 40 seconds, at an interval of about 50 seconds, or at an interval of about 60 seconds. In addition, each of the first curing rate, the second curing rate, the third curing rate, and the fourth curing rate may be an average value of values obtained by dividing a viscosity change measured at the time interval by the time interval.

The first curing rate, the second curing rate, the third curing rate, and the fourth curing rate may be calculated by the following equation 1: [Equation 1] $Curing rate = viscosity change / time interval$

The first curing rate, the second curing rate, the third curing rate, and the fourth curing rate may be measured for about 1 minute to about 30 minutes. The first curing rate, the second curing rate, the third curing rate, and the fourth curing rate may be measured for about 1 minute to about 20 minutes. The first curing rate, the second curing rate, the third curing rate, and the fourth curing rate may be measured for about 1 minute and may be measured while the viscosity of the silicone-based resin composition can be measured.
the first curing rate, the second curing rate, the third curing rate, and the fourth curing rate may be measured by Brookfield viscometer (Model DV2T). In addition, when measuring the viscosity, a rotation speed may be about 10 rpm. In addition, when measuring the viscosity, a selection coefficient may be about 200.

The silicone-based resin composition may have a cone penetration.

The cone penetration of the silicone-based resin composition may be measured by the following method:

### [Measurement method]

The silicone-based resin composition is sufficiently cured to prepare a silicone resin block. The silicone-based resin composition is cured at about 70°C for about 20 minutes to manufacture a silicone resin block having a height of about 70 mm, a diameter of about 60 mm and a cylindrical shape. The cone penetration of the silicone resin block is measured according to ISO 2137. When measuring the cone penetration, a one-quarter-scale cone is used.

The cone penetration of the silicone-based resin composition may be about 2 1/10 mm to about 50 1/10 mm. The cone penetration of the silicone-based resin composition may be about 3 1/10 mm to about 45 1/10 mm. The cone penetration of the silicone-based resin composition may be about 4 1/10 mm to about 30 1/10 mm. The cone penetration of the silicone-based resin composition may be about 20 1/10 mm to about 50 1/10 mm. The cone penetration of the silicone-based resin composition may be about 25 1/10 mm to about 45 1/10 mm. The cone penetration of the silicone-based resin composition may be about 20 1/10 mm to about 40 1/10 mm.

Since the cone penetration of the silicone-based resin composition is within the above range, the silicone-based resin composition may perform a buffering action between the battery cells. **In** addition, since the cone penetration of the silicone-based resin composition is within the above range, the capping parts may easily seal the uncured silicone-based resin composition.

**In** addition, since the cone penetration of the silicone-based resin composition is within the above range, the battery cells may be properly fixed.

The silicone-based resin composition may have a contact angle.

The contact angle of the silicone-based resin composition may be measured according to the following measurement method:

### [Measurement method]

The silicone-based resin composition is applied dropwise to a glass plate, and then a contact angle between an upper surface of the glass plate and the silicone-based resin composition drop is measured. The contact angle between the glass plate and the silicone-based resin composition may be measured at a time point of about 5 seconds.

The contact angle of the silicone-based resin composition may be about 10° to about 45°. The contact angle of the silicone-based resin composition may be about 10° to about 40°. The contact angle of the silicone-based resin composition may be about 10° to about 35°. The contact angle of the silicone-based resin composition may be about 10° to about 30°. The contact angle of the silicone-based resin composition may be about 15° to about 30°.

The silicone-based resin composition may have a contact angle reduction rate.

The contact angle reduction rate may be calculated by the following Equation 2. [Equation 2] 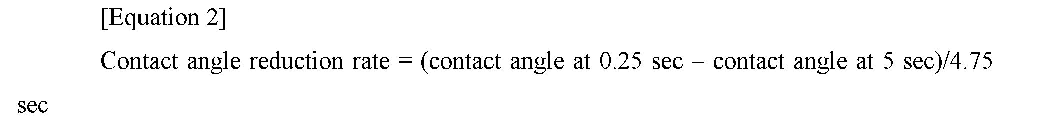 Contact angle reduction rate = (contact angle at 0.25 sec - contact angle at 5 sec)/4.75 sec

The contact angle reduction rate of the silicone-based resin composition may be about 5°/s to about 15°/s. The contact angle reduction rate of the silicone-based resin composition may be about 6°/s to about 14°/s. The contact angle reduction rate of the silicone-based resin composition may be about 7°/s to about 13°/s.

Since the silicone-based resin composition has a contact angle and contact angle reduction rate within the above ranges, the silicone-based resin composition may be easily injected between the battery cells. That is, the battery cells may have an exterior material such as a polymer film, and the silicone-based resin composition may have high wettability to the exterior material of the battery cells.

Accordingly, the silicone-based resin composition may be rapidly injected between the battery cells and may prevent an unfilled space from being generated.

The silicone-based resin composition may have thermal conductivity.

**In** addition, the first curable resin composition may have a contact angle. The contact angle of the first curable resin composition may be measured by the above measurement method.

The contact angle of the first curable resin composition may be about 10° to about 45°. The contact angle of the first curable resin composition may be about 10° to about 40°. The contact angle of the first curable resin composition may be about 10° to about 35°. The contact angle of the first curable resin composition may be about 15° to about 30°.

**In** addition, the second curable resin composition may have a contact angle. The contact angle of the second curable resin composition may be measured by the above measurement method.

The contact angle of the second curable resin composition may be about 10° to about 45°. The contact angle of the second curable resin composition may be about 10° to about 40°. The contact angle of the second curable resin composition may be about 10° to about 35°. The contact angle of the second curable resin composition may be about 15° to about 30°.

The first curable resin composition may have a contact angle reduction rate.

The contact angle reduction rate of the first curable resin composition may be about 6°/s to about 14°/s. The contact angle reduction rate of the first curable resin composition may be about 7°/s to about 13°/s.

The second curable resin composition may have a contact angle reduction rate.

The contact angle reduction rate of the second curable resin composition may be about 6°/s to about 14°/s. The contact angle reduction rate of the second curable resin composition may be about 7°/s to about 13°/s.

A method of manufacturing the battery module according to an embodiment includes a step of injecting and filling a silicone-based resin composition in a case; and a step of curing a portion of the silicone-based resin composition to form capping parts.

Accordingly, the method of manufacturing a battery module according to an embodiment may reduce a time required for curing the curable resin composition. That is, after a process of forming the capping parts, the method of manufacturing a battery module according to an embodiment may cure the remaining curable resin composition.

In particular, the silicone-based resin composition may have a curing rate within the above range. That is, the silicone-based resin composition may have a high curing rate at a high temperature and a low curing rate at a low temperature.

Accordingly, the curable resin composition in an open portion of the case may be rapidly cured under a high-temperature condition. Therefore, the method of manufacturing a battery module according to an embodiment may solidly and rapidly form the capping parts.

Therefore, the method of manufacturing a battery module according to an embodiment may prevent the curable resin composition from flowing out even if the curable resin composition is not completely cured. In addition, the method of manufacturing a battery module according to an embodiment may prevent the curable resin composition from being separated from a desired position.

In addition, the curable resin composition has a low curing rate at room temperature. Accordingly, an increase in the viscosity of the curable resin composition may be minimized until a two-component composition is mixed and then injected.

That is, since the curable resin composition has a low curing rate at a low temperature, the occurrence of process problems in a mixing process and an injection process may be reduced. Accordingly, the silicone-based resin composition may be easily applied to the manufacturing process of the battery module.

In particular, since the silicone-based resin composition has a low curing rate at a low temperature, the method of manufacturing a battery module according to an embodiment may facilitate injection of the curable resin composition.

In addition, the method of manufacturing a battery module according to an embodiment may inject the curable resin composition into a desired position of the case uniformly as a whole without an unfilled space.

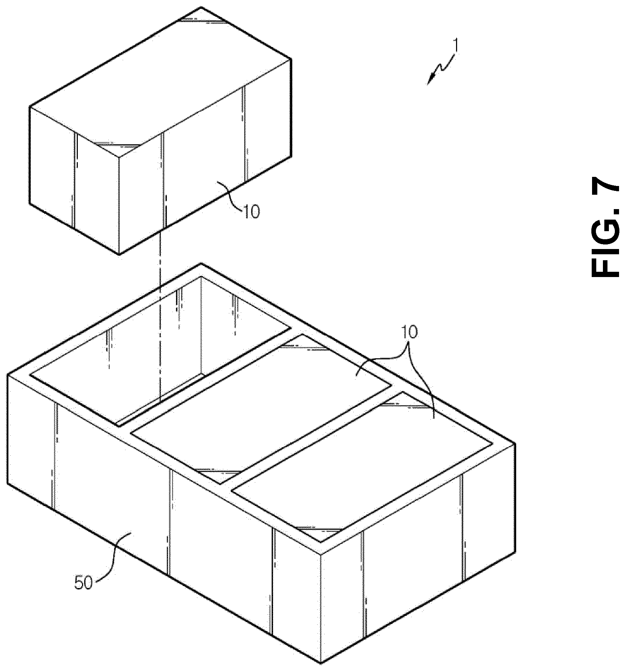

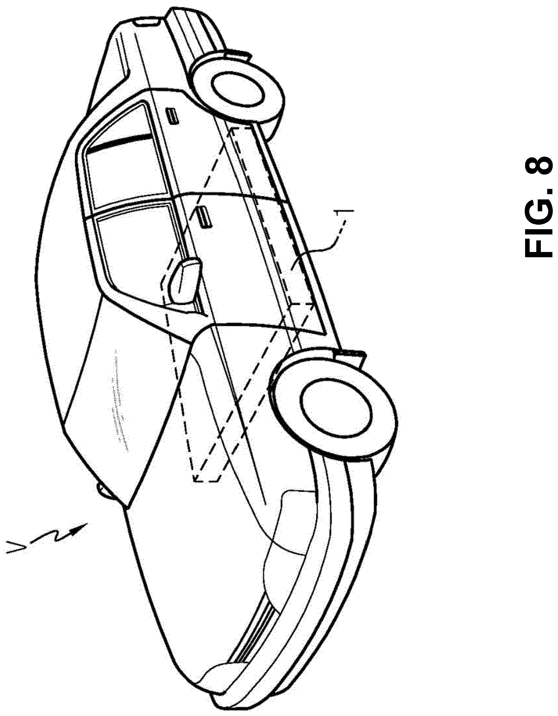

FIG. 7 is a diagram for explaining a battery pack according to an embodiment, and FIG. 8 is a diagram for explaining a vehicle according to an embodiment of the present invention.

Referring to FIGS. 7 and 8, a battery pack 1 may include at least one battery module 10 according to the above embodiment and a pack case 50 for packaging the at least one battery module 10.

The battery pack 1 may be provided in a vehicle V as a fuel source for the vehicle V. For example, the battery pack 1 may be provided in an electric vehicle, a hybrid vehicle, and other vehicles V that can use the battery pack 1 as a fuel source.

In addition, it is natural that the battery pack 1 may be provided in other devices, instruments, and facilities, such as an energy storage system using a secondary battery, in addition to the vehicle V.

As such, since the battery pack 1 according to the present embodiment and devices, instruments, and facilities, such as the vehicle V, including the battery pack 1 may include the above-described battery module 10, the battery pack 1 having all advantages due to the battery module 10, and devices, instruments, and facilities, such as the vehicle V, provided with the battery pack 1 may be implemented.

According to various embodiments as described above, the battery module 10 capable of more stably supporting the battery cells 100, and the battery pack 1 and vehicle V including the battery module 10 may be provided.

In addition, according to various embodiments as described above, the battery module 10 capable of improving the safety of the battery cells 100 by preventing damage to the battery cells 100 due to external shock, and the battery pack 1 and vehicle V including the battery module 10 may be provided.

Hereinafter, the present invention will be described in more detail with reference to Examples and Comparative Examples for the purpose of clarifying the effects of the present invention, but the present invention is not limited thereto.

### Example

A : Polysiloxane compound represented by Chemical Formula 4, having a viscosity of about 150 mPa·s to about 220 mPa·s at 23°C, and including a silicon-bonded alkenyl group
B : Polysiloxane compound represented by Chemical Formula 4, having a viscosity of about 40000 mPa·s to about 50000 mPa·s at 23°C, and including a silicon-bonded alkenyl group
C-1 : Hydrogen polysiloxane compound represented by Chemical Formula 8, having a viscosity of about 150 mPa·s to about 250 mPa·s at 23°C, and having a hydrogen group bonded to a side chain thereof
C-2 : Hydrogen polysiloxane compound represented by Chemical Formula 6, having a viscosity of about 60 mPa·s to about 90 mPa·s at 23°C, and having a hydrogen group bonded to a terminal thereof
D : Platinum-divinyltetramethyldisiloxane complex
E : 1-ethynyl-1-cyclohexanol
F : Glass bubble (3M, Glass bubble K15 density 0.15 g/cm³)
G : Colored pigment (ELASTOSIL^{®} COLOR PASTE FL ULTRAMARINE BLUE RAL 5002)

The components were uniformly mixed at a speed of about 40 rpm at room temperature for one hour by means of a planetary mixer, thereby preparing first curable resin compositions as summarized in the following Table 1 and second curable resin compositions summarized in the following Table 2:

**[Table 1]**

| Classification | A (parts by weight) | B (parts by weight) | C-1 (parts by weight) | C-2 (parts by weight) | F (parts by weight) | G (parts by weight) |
|---|---|---|---|---|---|---|
| Example 1 | 35 | 2 | 2 | 50 | 9 | 2 |
| Example 2 | 35 | 2 | 2 | 50 | 9 | 2 |
| Example 3 | 35 | 2 | 2 | 50 | 9 | 2 |
| Example 4 | 35 | 2 | 2 | 50 | 9 | 2 |
| Example 5 | 35 | 2 | 2 | 50 | 9 | 2 |
| Example 6 | 35 | 2 | 2 | 50 | 9 | 2 |
| Example 7 | 37 | 2 | 2 | 50 | 7 | 2 |
| Example 8 | 36 | 2 | 2 | 48 | 10 | 2 |
| Example 9 | 36 | 2 | 2 | 49 | 9 | 2 |
| Example 10 | 36 | 2 | 3 | 48 | 9 | 2 |
| Example 11 | 35 | 2 | 5 | 47 | 9 | 2 |
| Comparative Example 1 | 35 | 2 | 2 | 50 | 9 | 2 |
| Comparative Example 2 | 35 | 2 | 2 | 50 | 9 | 2 |

**[Table 2]**

| Classification | A (parts by weight) | D (parts by weight) | E (parts by weight) | F (parts by weight) |
|---|---|---|---|---|
| Example 1 | 90.6 | 0.3 | 0.1 | 9 |
| Example 2 | 90.8 | 0.1 | 0.1 | 9 |
| Example 3 | 90.78 | 0.12 | 0.1 | 9 |
| Example 4 | 90.76 | 0.14 | 0.1 | 9 |
| Example 5 | 90.74 | 0.16 | 0.1 | 9 |
| Example 6 | 90.7 | 0.2 | 0.1 | 9 |
| Example 7 | 72.8 | 0.1 | 0.1 | 7 |
| Example 8 | 89.8 | 0.1 | 0.1 | 10 |
| Example 9 | 90.65 | 0.25 | 0.1 | 9 |
| Example 10 | 90.65 | 0.25 | 0.1 | 9 |
| Example 11 | 90.65 | 0.25 | 0.1 | 9 |
| Comparative Example 1 | 90.3 | 0.6 | 0.1 | 9 |
| Comparative Example 2 | 89.9 | 1.0 | 0.1 | 9 |

### <Measurement examples>

### 1. Curing rate

The first curable resin composition and the second curable resin composition were uniformly mixed for about one minute in a weight ratio of 1:1, and the viscosity of the mixed composition was measured at about 23°C at an interval of about 10 seconds by a viscometer (Brookfield viscometer, Model DV2T) at a speed of about 10 rpm.

In addition, the first composition and the second composition were uniformly mixed under the same conditions as above, the temperature was raised to about 70°C, and the viscosity of the mixed composition was measured by means of a viscometer at an interval of about 10 seconds.

### 2. Cone penetration

The first composition and the second composition were uniformly mixed under the same conditions as above and cured at about 60°C for about 1 hour, thereby manufacturing a silicone-based resin block having a diameter of about 60 mm and a height of about 70 mm. A penetration depth of the silicone-based resin block was measured according to ISO 2137 using a 9.38 g hollow cone.

### 3. Contact angle

The first composition and the second composition were uniformly mixed under the same conditions as above, 0.02 ml of the mixed composition was added dropwise to glass, and a contact angle by time was measured by a contact angle measurer (Phoenix 300 analyzer). The contact angle of each of the first composition and the second composition was measured in the same manner.

### 4. Flame retardancy

Measured by UL94 test method.

### 5. Injection characteristic

The mixed composition was injected into a stainless-steel tube having a diameter of about 1.94 mm, and it was observed whether the mixed composition was discharged by its own weight.

**[Table 3]**

| Classification | Curing rate (23°C, mPa·s/min) | Curing rate (50°C, mPa·s/min) | Curing rate (60°C, mPa·s/min) | Curing rate (70°C, mPa·s/min) |
|---|---|---|---|---|
| Example 1 | 32 | 310 | 565 | 1005 |
| Example 2 | 12 | 120 | 234 | 432 |
| Example 3 | 14 | 132 | 245 | 430 |
| Example 4 | 16 | 140 | 258 | 472 |
| Example 5 | 17 | 185 | 337 | 591 |
| Example 6 | 30 | 282 | 521 | 942 |
| Example 7 | 30 | 291 | 541 | 998 |
| Example 8 | 65 | 432 | 598 | 894 |
| Example 9 | 31 | 315 | 560 | 1010 |
| Example 10 | 32 | 320 | 572 | 1025 |
| Example 11 | 35 | 330 | 593 | 1040 |
| Comparative Example 1 | 106 | 1030 | 1922 | 3416 |
| Comparative Example 2 | 211 | 2156 | 3828 | 6932 |

**[Table 4]**

| Classification | Contact angle (5 sec, °, Mixed composition) | Contact angle reduction rate (°/s, Mixed composition) |
|---|---|---|
| Example 1 | 24 | 9.2 |
| Example 2 | 22 | 9.0 |
| Example 3 | 23 | 9.1 |
| Example 4 | 25 | 9.1 |
| Example 5 | 23 | 9.2 |
| Example 6 | 23 | 9.2 |
| Example 7 | 20 | 8.5 |
| Example 8 | 31 | 9.8 |
| Example 9 | 22 | 9.1 |
| Example 10 | 23 | 9.2 |
| Example 11 | 22 | 9.3 |
| Comparative Example 1 | 21 | 9.3 |
| Comparative Example 2 | 24 | 9.2 |

**[Table 5]**

| Classification | Contact angle (5 sec, °, Fist composition) | Contact angle reduction rate (°/s, First composition) |
|---|---|---|
| Example 1 | 22 | 8.7 |
| Example 2 | 21 | 8.8 |
| Example 3 | 22 | 8.8 |
| Example 4 | 23 | 8.9 |
| Example 5 | 23 | 9.0 |
| Example 6 | 22 | 8.7 |
| Example 7 | 20 | 8.4 |
| Example 8 | 30 | 9.9 |
| Example 9 | 23 | 9.1 |
| Example 10 | 22 | 8.8 |
| Example 11 | 21 | 9.0 |
| Comparative Example 1 | 21 | 8.8 |
| Comparative Example 2 | 22 | 8.9 |

**[Table 6]**

| Classification | Contact angle (5 sec, °, Second composition) | Contact angle reduction rate (°/s, Second composition) |
|---|---|---|
| Example 1 | 25 | 9.8 |
| Example 2 | 26 | 9.5 |
| Example 3 | 25 | 9.5 |
| Example 4 | 25 | 9.6 |
| Example 5 | 26 | 9.7 |
| Example 6 | 27 | 9.5 |
| Example 7 | 21 | 8.8 |
| Example 8 | 31 | 9.7 |
| Example 9 | 26 | 9.6 |
| Example 10 | 26 | 9.5 |
| Example 11 | 25 | 9.4 |
| Comparative Example 1 | 24 | 9.5 |
| Comparative Example 2 | 25 | 9.5 |

**[Table 7]**

| Classification | Cone penetration (1/10 mm) | Flame retardancy | Injection characteristic |
|---|---|---|---|
| Example 1 | 34 | 94-V1 | O |
| Example 2 | 35 | 94-V1 | O |
| Example 3 | 32 | 94-V1 | O |
| Example 4 | 32 | 94-V1 | O |
| Example 5 | 33 | 94-V1 | O |
| Example 6 | 34 | 94-V1 | O |
| Example 7 | 31 | 94-V1 | O |
| Example 8 | 32 | 94-V1 | O |
| Example 9 | 31 | 94-V1 | O |
| Example 10 | 16 | 94-V1 | O |
| Example 11 | 8 | 94-V1 | O |
| Comparative Example 1 | 32 | 94-V1 | O |
| Comparative Example 2 | 31 | 94-V1 | O |

As summarized in Tables 3 to 7, the silicone-based curable resin compositions according to the examples exhibit an appropriate curing rate, appropriate mechanical strength, and appropriate surface properties. In addition, in the battery pack manufacturing process, the silicone-based curable resin compositions were evenly filled throughout without any gaps.

### [Description of Reference Numerals]

cell 100
module case 200
bus bar member 300
circuit board assembly 400
support plate 500
buffer part 600

## Claims

1. A method of manufacturing a battery module, the method comprising:
preparing a case configured to accommodate a plurality of battery cells therein;
filling a curable resin composition in the case; and
curing a portion of the curable resin composition to form capping parts,
wherein the curable resin composition comprises a silicone-based polymer; a curing catalyst; a crosslinking agent; and a hollow filler,
the curable resin composition has a curing rate of 10 mPa·s/min to 70 mPa·s/min at 23°C, determined as described in the description,
and
the curable resin composition has a curing rate of 400 mPa·s/min to 2000 mPa·s/min at 70°C, determined as described in the description,
wherein the curable resin composition is selected from eleven mixtures of a first curable resin composition with the corresponding second curable resin mixture in a weight ratio of 1:1, wherein
the first curable resin compositions are summarized in the following Table 1 and
the corresponding second curable resin compositions are summarized in the following Table 2,
**[Table 1]**
| Classification | A (parts by weight) | B (parts by weight) | C-1 (parts by weight) | C-2 (parts by weight) | F (parts by weight) | G (parts by weight) |
|---|---|---|---|---|---|---|
| Example 1 | 35 | 2 | 2 | 50 | 9 | 2 |
| Example 2 | 35 | 2 | 2 | 50 | 9 | 2 |
| Example 3 | 35 | 2 | 2 | 50 | 9 | 2 |
| Example 4 | 35 | 2 | 2 | 50 | 9 | 2 |
| Example 5 | 35 | 2 | 2 | 50 | 9 | 2 |
| Example 6 | 35 | 2 | 2 | 50 | 9 | 2 |
| Example 7 | 37 | 2 | 2 | 50 | 7 | 2 |
| Example 8 | 36 | 2 | 2 | 48 | 10 | 2 |
| Example 9 | 36 | 2 | 2 | 49 | 9 | 2 |
| Example 10 | 36 | 2 | 3 | 48 | 9 | 2 |
| Example 11 | 35 | 2 | 5 | 47 | 9 | 2 |
**[Table 2]**
| Classification | A (parts by weight) | D (parts by weight) | E (parts by weight) | F (parts by weight) |
|---|---|---|---|---|
| Example 1 | 90.6 | 0.3 | 0.1 | 9 |
| Example 2 | 90.8 | 0.1 | 0.1 | 9 |
| Example 3 | 90.78 | 0.12 | 0.1 | 9 |
| Example 4 | 90.76 | 0.14 | 0.1 | 9 |
| Example 5 | 90.74 | 0.16 | 0.1 | 9 |
| Example 6 | 90.7 | 0.2 | 0.1 | 9 |
| Example 7 | 72.8 | 0.1 | 0.1 | 7 |
| Example 8 | 89.8 | 0.1 | 0.1 | 10 |
| Example 9 | 90.65 | 0.25 | 0.1 | 9 |
| Example 10 | 90.65 | 0.25 | 0.1 | 9 |
| Example 11 | 90.65 | 0.25 | 0.1 | 9 |
| | | | | |
|---|---|---|---|---|
| In Table 1 and 2 the compounds are: A : Polysiloxane compound represented by Chemical Formula 4, and having a viscosity of about 150 mPa·s to about 220 mPa·s at 23°C, and including a silicon-bonded alkenyl group, and B : Polysiloxane compound represented by Chemical Formula 4, having a viscosity of about 40000 mPa·s to about 50000 mPa·s at 23°C, and including a silicon-bonded alkenyl group 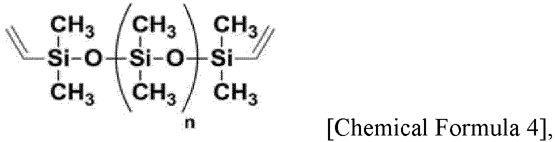 and C-1 : Hydrogen polysiloxane compound represented by Chemical Formula 8, having a viscosity of about 150 mPa·s to about 250 mPa·s at 23°C, and having a hydrogen group bonded to a side chain thereof 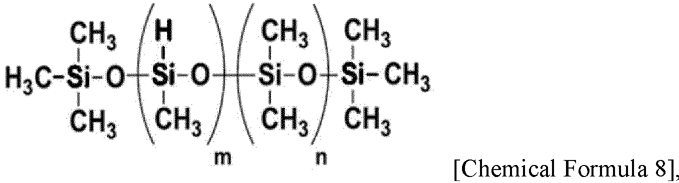 and C-2 : Hydrogen polysiloxane compound represented by Chemical Formula 6, having a viscosity of about 60 mPa·s to about 90 mPa·s at 23°C, and having a hydrogen group bonded to a terminal thereof, 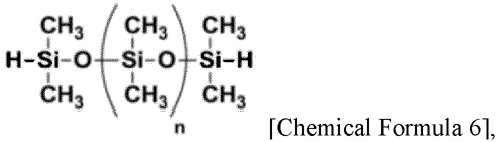 and D : Platinum-divinyltetramethyldisiloxane complex, and E : 1-ethynyl-1-cyclohexanol, and F : Glass bubble (3M, Glass bubble K15 density 0.15 g/cm3), and G : Colored pigment (ELASTOSIL^{®} COLOR PASTE FL ULTRAMARINE BLUE RAL 5002). | | | | |

2. A battery module, comprising:
a plurality of battery cells;
a case configured to accommodate the battery cells; and
a buffer part configured to surround the battery cells and disposed in the case,
wherein the buffer part comprises a curable resin composition,
the curable resin composition comprises a silicone-based polymer; a curing catalyst; a crosslinking agent; and a hollow filler,
the curable resin composition has a curing rate of 10 mPa·s/min to 70 mPa·s/min at 23°C, determined as described in the description, and
the curable resin composition has a curing rate of 400 mPa·s/min to 2000 mPa·s/min at 70°C, determined as described in the description,
wherein the curable resin composition is selected from eleven mixtures of a first curable resin composition with the corresponding second curable resin mixture in a weight ratio of 1:1, wherein
the first curable resin compositions are summarized in the following Table 1 and
the corresponding second curable resin compositions are summarized in the following Table 2,
**[Table 1]**
| Classification | A (parts by weight) | B (parts by weight) | C-1 (parts by weight) | C-2 (parts by weight) | F (parts by weight) | G (parts by weight) |
|---|---|---|---|---|---|---|
| Example 1 | 35 | 2 | 2 | 50 | 9 | 2 |
| Example 2 | 35 | 2 | 2 | 50 | 9 | 2 |
| Example 3 | 35 | 2 | 2 | 50 | 9 | 2 |
| Example 4 | 35 | 2 | 2 | 50 | 9 | 2 |
| Example 5 | 35 | 2 | 2 | 50 | 9 | 2 |
| Example 6 | 35 | 2 | 2 | 50 | 9 | 2 |
| Example 7 | 37 | 2 | 2 | 50 | 7 | 2 |
| Example 8 | 36 | 2 | 2 | 48 | 10 | 2 |
| Example 9 | 36 | 2 | 2 | 49 | 9 | 2 |
| Example 10 | 36 | 2 | 3 | 48 | 9 | 2 |
| Example 11 | 35 | 2 | 5 | 47 | 9 | 2 |
**[Table 2]**
| Classification | A (parts by weight) | D (parts by weight) | E (parts by weight) | F (parts by weight) |
|---|---|---|---|---|
| Example 1 | 90.6 | 0.3 | 0.1 | 9 |
| Example 2 | 90.8 | 0.1 | 0.1 | 9 |
| Example 3 | 90.78 | 0.12 | 0.1 | 9 |
| Example 4 | 90.76 | 0.14 | 0.1 | 9 |
| Example 5 | 90.74 | 0.16 | 0.1 | 9 |
| Example 6 | 90.7 | 0.2 | 0.1 | 9 |
| Example 7 | 72.8 | 0.1 | 0.1 | 7 |
| Example 8 | 89.8 | 0.1 | 0.1 | 10 |
| Example 9 | 90.65 | 0.25 | 0.1 | 9 |
| Example 10 | 90.65 | 0.25 | 0.1 | 9 |
| Example 11 | 90.65 | 0.25 | 0.1 | 9 |
| | | | | |
|---|---|---|---|---|
| In Table 1 and 2 the compounds are: A : Polysiloxane compound represented by Chemical Formula 4, and having a viscosity of about 150 mPa·s to about 220 mPa·s at 23°C, and including a silicon-bonded alkenyl group, and B : Polysiloxane compound represented by Chemical Formula 4, having a viscosity of about 40000 mPa·s to about 50000 mPa·s at 23°C, and including a silicon-bonded alkenyl group 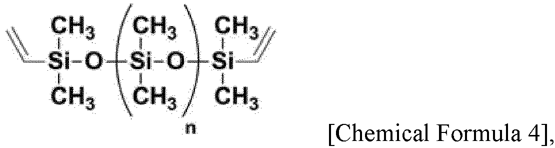 and C-1 : Hydrogen polysiloxane compound represented by Chemical Formula 8, having a viscosity of about 150 mPa·s to about 250 mPa·s at 23°C, and having a hydrogen group bonded to a side chain thereof 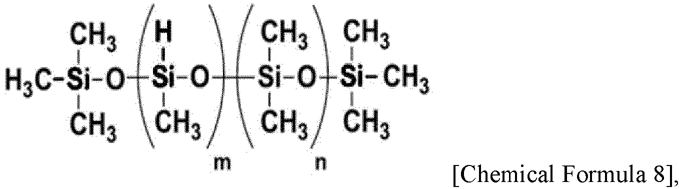 and C-2 : Hydrogen polysiloxane compound represented by Chemical Formula 6, having a viscosity of about 60 mPa·s to about 90 mPa·s at 23°C, and having a hydrogen group bonded to a terminal thereof, 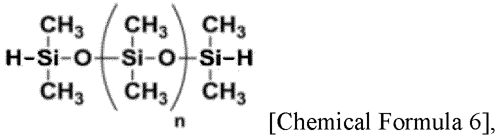 and D : Platinum-divinyltetramethyldisiloxane complex, and E : 1-ethynyl-1-cyclohexanol, and F : Glass bubble (3M, Glass bubble K15 density 0.15 g/cm3), and G : Colored pigment (ELASTOSIL^{®} COLOR PASTE FL ULTRAMARINE BLUE RAL 5002). | | | | |

3. A curable resin composition for manufacturing a battery module, the curable resin composition comprising:
a silicone-based polymer;
a curing catalyst;
a crosslinking agent; and
a hollow filler,
wherein the curable resin composition has a first curing rate of 10 mPa·s/min to 70 mPa· s/min at 23°C, determined as described in the description, and
the curable resin composition has a second curing rate of 400 mPa·s/min to 2000 mPa·s/min at 70°C, determined as described in the description,
wherein the curable resin composition is selected from eleven mixtures of a first curable resin composition with the corresponding second curable resin mixture in a weight ratio of 1:1, wherein
the first curable resin compositions are summarized in the following Table 1 and
the corresponding second curable resin compositions are summarized in the following Table 2,
**[Table 1]**
| Classification | A (parts by weight) | B (parts by weight) | C-1 (parts by weight) | C-2 (parts by weight) | F (parts by weight) | G (parts by weight) |
|---|---|---|---|---|---|---|
| Example 1 | 35 | 2 | 2 | 50 | 9 | 2 |
| Example 2 | 35 | 2 | 2 | 50 | 9 | 2 |
| Example 3 | 35 | 2 | 2 | 50 | 9 | 2 |
| Example 4 | 35 | 2 | 2 | 50 | 9 | 2 |
| Example 5 | 35 | 2 | 2 | 50 | 9 | 2 |
| Example 6 | 35 | 2 | 2 | 50 | 9 | 2 |
| Example 7 | 37 | 2 | 2 | 50 | 7 | 2 |
| Example 8 | 36 | 2 | 2 | 48 | 10 | 2 |
| Example 9 | 36 | 2 | 2 | 49 | 9 | 2 |
| Example 10 | 36 | 2 | 3 | 48 | 9 | 2 |
| Example 11 | 35 | 2 | 5 | 47 | 9 | 2 |
**[Table 2]**
| Classification | A (parts by weight) | D (parts by weight) | E (parts by weight) | F (parts by weight) |
|---|---|---|---|---|
| Example 1 | 90.6 | 0.3 | 0.1 | 9 |
| Example 2 | 90.8 | 0.1 | 0.1 | 9 |
| Example 3 | 90.78 | 0.12 | 0.1 | 9 |
| Example 4 | 90.76 | 0.14 | 0.1 | 9 |
| Example 5 | 90.74 | 0.16 | 0.1 | 9 |
| Example 6 | 90.7 | 0.2 | 0.1 | 9 |
| Example 7 | 72.8 | 0.1 | 0.1 | 7 |
| Example 8 | 89.8 | 0.1 | 0.1 | 10 |
| Example 9 | 90.65 | 0.25 | 0.1 | 9 |
| Example 10 | 90.65 | 0.25 | 0.1 | 9 |
| Example 11 | 90.65 | 0.25 | 0.1 | 9 |
| | | | | |
|---|---|---|---|---|
| In Table 1 and 2 the compounds are: A : Polysiloxane compound represented by Chemical Formula 4, and having a viscosity of about 150 mPa·s to about 220 mPa·s at 23°C, and including a silicon-bonded alkenyl group, and B : Polysiloxane compound represented by Chemical Formula 4, having a viscosity of about 40000 mPa·s to about 50000 mPa·s at 23°C, and including a silicon-bonded alkenyl group 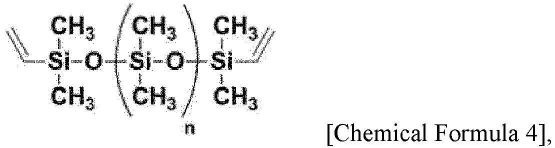 and C-1 : Hydrogen polysiloxane compound represented by Chemical Formula 8, having a viscosity of about 150 mPa·s to about 250 mPa·s at 23°C, and having a hydrogen group bonded to a side chain thereof 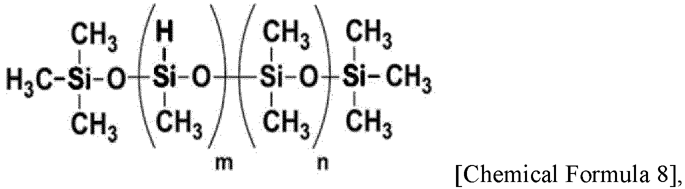 and C-2 : Hydrogen polysiloxane compound represented by Chemical Formula 6, having a viscosity of about 60 mPa·s to about 90 mPa·s at 23°C, and having a hydrogen group bonded to a terminal thereof, 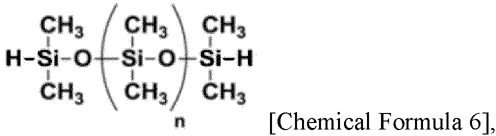 and D : Platinum-divinyltetramethyldisiloxane complex, and E : 1-ethynyl-1-cyclohexanol, and F : Glass bubble (3M, Glass bubble K15 density 0.15 g/cm3), and G : Colored pigment (ELASTOSIL^{®} COLOR PASTE FL ULTRAMARINE BLUE RAL 5002). | | | | |

4. The curable resin composition according to claim 3, wherein the curable resin composition has a viscosity of 500 mPa·s to 1200 mPa·s at 23°C.

5. The curable resin composition according to claim 4, wherein the curable resin composition has a viscosity of 400 mPa·s to 1100 mPa·s at 70°C.

6. The curable resin composition according to claim 3, wherein a ratio of the second curing rate relative to the first curing rate is 10 to 60.

7. The curable resin composition according to claim 3, wherein a cone penetration of the curable resin composition measured according to a measurement method below is 20 1/10 mm to 50 1/10 mm:
[Measurement method]
the curable resin composition is mixed and cured at 25°C for 3 hours to manufacture a silicone-based resin block having a diameter of 60 mm and a height of 70 mm, and a penetration depth of the silicone-based resin block is measured according to ISO 2137 using a 9.38 g hollow cone.

8. The curable resin composition according to claim 3, wherein a contact angle of the curable resin composition measured according to a measurement method below is 10° to 30°:
[Measurement method]
the curable resin composition is added in a volume of 10 ml dropwise to a glass plate, and after five seconds, a contact angle between the glass plate and the curable resin composition is measured.

9. The curable resin composition according to claim9, wherein a contact angle reduction rate of the curable resin composition measured according to a measurement method below is 5 °/sec to 15 °/sec:
[Measurement method]
the curable resin composition is added in the volume dropwise to the glass plate, and after 0.25 seconds, a contact angle between the glass plate and the curable resin composition is measured, where the contact angle reduction rate is a value obtained by dividing a difference between the contact angle at 0.25 seconds and the contact angle at 5 seconds by 4.75 seconds.

10. A curable resin composition for manufacturing a battery module, the curable resin composition comprising:
a first silicone resin composition comprising a first organic polysiloxane, a crosslinking agent and a chain extender; and
a second silicone resin composition comprising a second organic polysiloxane, a curing catalyst and a reaction inhibitor,
wherein at least one of the first silicone resin composition and the second silicone resin composition comprises a hollow bead, and
when the first silicone resin composition and the second silicone resin composition are mixed and cured,
at 23°C, the curable resin composition has a first curing rate of 10 mPa·s/min to 70 mPa·s/min, determined as described in the description, and
at 70°C, the curable resin composition has a second curing rate of 400 mPa·s/min to 2000 mPa, determined as described in the description,
wherein the curable resin composition is selected from eleven mixtures of a first curable resin composition with the corresponding second curable resin mixture in a weight ratio of 1:1, wherein
the first curable resin compositions are summarized in the following Table 1 and
the corresponding second curable resin compositions are summarized in the following Table 2,
**[Table 1]**
| Classification | A (parts by weight) | B (parts by weight) | C-1 (parts by weight) | C-2 (parts by weight) | F (parts by weight) | G (parts by weight) |
|---|---|---|---|---|---|---|
| Example 1 | 35 | 2 | 2 | 50 | 9 | 2 |
| Example 2 | 35 | 2 | 2 | 50 | 9 | 2 |
| Example 3 | 35 | 2 | 2 | 50 | 9 | 2 |
| Example 4 | 35 | 2 | 2 | 50 | 9 | 2 |
| Example 5 | 35 | 2 | 2 | 50 | 9 | 2 |
| Example 6 | 35 | 2 | 2 | 50 | 9 | 2 |
| Example 7 | 37 | 2 | 2 | 50 | 7 | 2 |
| Example 8 | 36 | 2 | 2 | 48 | 10 | 2 |
| Example 9 | 36 | 2 | 2 | 49 | 9 | 2 |
| Example 10 | 36 | 2 | 3 | 48 | 9 | 2 |
| Example 11 | 35 | 2 | 5 | 47 | 9 | 2 |
**[Table 2]**
| Classification | A (parts by weight) | D (parts by weight) | E (parts by weight) | F (parts by weight) |
|---|---|---|---|---|
| Example 1 | 90.6 | 0.3 | 0.1 | 9 |
| Example 2 | 90.8 | 0.1 | 0.1 | 9 |
| Example 3 | 90.78 | 0.12 | 0.1 | 9 |
| Example 4 | 90.76 | 0.14 | 0.1 | 9 |
| Example 5 | 90.74 | 0.16 | 0.1 | 9 |
| Example 6 | 90.7 | 0.2 | 0.1 | 9 |
| Example 7 | 72.8 | 0.1 | 0.1 | 7 |
| Example 8 | 89.8 | 0.1 | 0.1 | 10 |
| Example 9 | 90.65 | 0.25 | 0.1 | 9 |
| Example 10 | 90.65 | 0.25 | 0.1 | 9 |
| Example 11 | 90.65 | 0.25 | 0.1 | 9 |
| | | | | |
|---|---|---|---|---|
| In Table 1 and 2 the compounds are: A : Polysiloxane compound represented by Chemical Formula 4, and having a viscosity of about 150 mPa·s to about 220 mPa·s at 23°C, and including a silicon-bonded alkenyl group, and B : Polysiloxane compound represented by Chemical Formula 4, having a viscosity of about 40000 mPa·s to about 50000 mPa·s at 23°C, and including a silicon-bonded alkenyl group 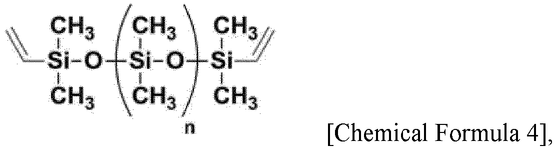 and C-1 : Hydrogen polysiloxane compound represented by Chemical Formula 8, having a viscosity of about 150 mPa·s to about 250 mPa·s at 23°C, and having a hydrogen group bonded to a side chain thereof 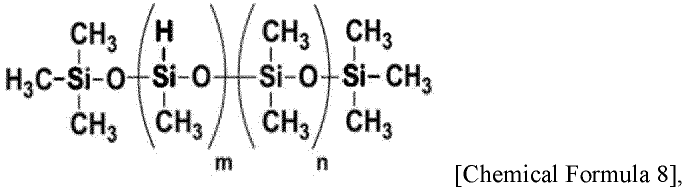 and C-2 : Hydrogen polysiloxane compound represented by Chemical Formula 6, having a viscosity of about 60 mPa·s to about 90 mPa·s at 23°C, and having a hydrogen group bonded to a terminal thereof, 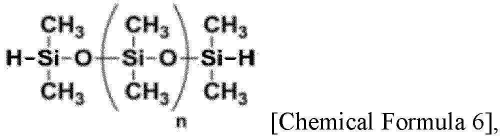 and D : Platinum-divinyltetramethyldisiloxane complex, and E : 1-ethynyl-1-cyclohexanol, and F : Glass bubble (3M, Glass bubble K15 density 0.15 g/cm3), and G : Colored pigment (ELASTOSIL^{®} COLOR PASTE FL ULTRAMARINE BLUE RAL 5002). | | | | |

## Patentansprüche

1. Verfahren zur Herstellung eines Batteriemoduls, wobei das Verfahren umfasst:
Vorbereiten eines Gehäuses, das dazu ausgelegt ist, eine Mehrzahl von Batteriezellen darin aufzunehmen;
Füllen einer härtbaren Harzzusammensetzung in das Gehäuse; und
Härten eines Teils der härtbaren Harzzusammensetzung, um Verkapselungsteile zu bilden,
wobei die härtbare Harzzusammensetzung ein Polymer auf Siliconbasis; einen Härtungskatalysator; ein Vernetzungsmittel; und einen hohlen Füllstoff umfasst,
die härtbare Harzzusammensetzung eine Härtungsrate von 10 MPa·s/min bis 70 MPa·s/min bei 23 °C aufweist, bestimmt wie in der Beschreibung beschrieben,
und
die härtbare Harzzusammensetzung eine Härtungsrate von 400 MPa·s/min bis 2000 MPa·s/min bei 70 °C aufweist, bestimmt wie in der Beschreibung beschrieben,
wobei die härtbare Harzzusammensetzung ausgewählt ist aus elf Gemischen einer ersten härtbaren Harzzusammensetzung mit dem entsprechenden zweiten härtbaren Harzgemisch in einem Gewichtsverhältnis von 1:1, wobei
die ersten härtbaren Harzzusammensetzungen in der folgenden Tabelle 1 zusammengefasst sind und
die entsprechenden zweiten härtbaren Harzzusammensetzungen sind in der folgenden Tabelle 2 zusammengefasst sind,
**[Tabelle 1]**
| Klassifizier ung | A (Gewich tsteile ) | B (Gewich tsteile ) | C-1 (Gewich tsteile ) | C-2 (Gewich tsteile ) | F (Gewich tsteile ) | G (Gewich tsteile ) |
|---|---|---|---|---|---|---|
| Beispiel 1 | 35 | 2 | 2 | 50 | 9 | 2 |
| Beispiel 2 | 35 | 2 | 2 | 50 | 9 | 2 |
| Beispiel 3 | 35 | 2 | 2 | 50 | 9 | 2 |
| Beispiel 4 | 35 | 2 | 2 | 50 | 9 | 2 |
| Beispiel 5 | 35 | 2 | 2 | 50 | 9 | 2 |
| Beispiel 6 | 35 | 2 | 2 | 50 | 9 | 2 |
| Beispiel 7 | 37 | 2 | 2 | 50 | 7 | 2 |
| Beispiel 8 | 36 | 2 | 2 | 48 | 10 | 2 |
| Beispiel 9 | 36 | 2 | 2 | 49 | 9 | 2 |
| Beispiel 10 | 36 | 2 | 3 | 48 | 9 | 2 |
| Beispiel 11 | 35 | 2 | 5 | 47 | 9 | 2 |
**[Tabelle 2]**
| Klassifizierung | A (Gewichts teile) | D (Gewichts teile) | E (Gewichts teile) | F (Gewicht steile) |
|---|---|---|---|---|
| Beispiel 1 | 90, 6 | 0, 3 | 0, 1 | 9 |
| Beispiel 2 | 90, 8 | 0,1 | 0, 1 | 9 |
| Beispiel 3 | 90,78 | 0, 12 | 0, 1 | 9 |
| Beispiel 4 | 90, 76 | 0,14 | 0,1 | 9 |
| Beispiel 5 | 90,74 | 0,16 | 0,1 | 9 |
| Beispiel 6 | 90, 7 | 0,2 | 0,1 | 9 |
| Beispiel 7 | 72,8 | 0, 1 | 0,1 | 7 |
| Beispiel 8 | 89, 8 | 0,1 | 0,1 | 10 |
| Beispiel 9 | 90, 65 | 0,25 | 0,1 | 9 |
| Beispiel 10 | 90, 65 | 0,25 | 0, 1 | 9 |
| Beispiel 11 | 90, 65 | 0,25 | 0, 1 | 9 |
| | | | | |
|---|---|---|---|---|
| In Tabelle 1 und 2 sind die Verbindungen: A: Polysiloxanverbindung, dargestellt durch die chemische Formel 4, und mit einer Viskosität von etwa 150 MPa·s bis etwa 220 MPa·s bei 23 °C, und enthaltend eine siliciumgebundene Alkenylgruppe, und B: Polysiloxanverbindung, dargestellt durch die chemische Formel 4, mit einer Viskosität von etwa 40000 MPa·s bis etwa 50000 MPa·s bei 23 °C, und enthaltend eine siliciumgebundene Alkenylgruppe 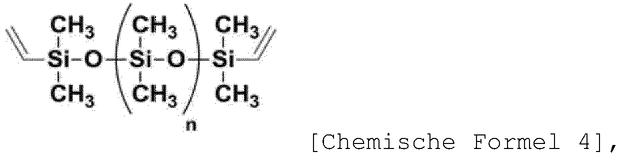 und C-1: Wasserstoffpolysiloxanverbindung, dargestellt durch die chemische Formel 8, mit einer Viskosität von etwa 150 MPa·s bis etwa 250 MPa·s bei 23 °C und mit einer Wasserstoffgruppe an eine Seitenkette davon gebunden 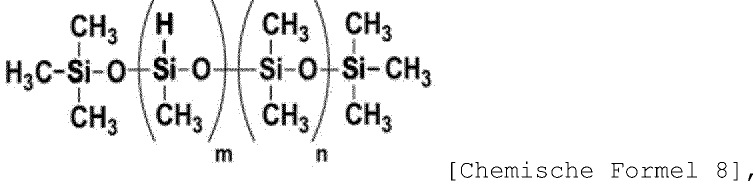 und C-2: Wasserstoffpolysiloxanverbindung, dargestellt durch die chemische Formel 6, mit einer Viskosität von etwa 60 MPa·s bis etwa 90 MPa·s bei 23 °C und mit einer Wasserstoffgruppe an ein Ende davon gebunden 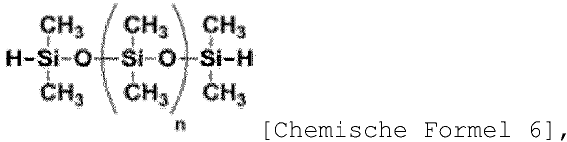 und D: Platin-Divinyltetramethyldisiloxan-Komplex, und E: 1-Ethinyl-1-cyclohexanol, und F: Glasblase (3M, Glasblase K15, Dichte 0,15 g/cm3), und G: Farbpigment (ELASTOSIL^{®} COLOR PASTE FL ULTRAMARINE BLUE RAL 5002). | | | | |

2. Batteriemodul umfassend:
eine Mehrzahl von Batteriezellen;
ein Gehäuse, dazu ausgelegt, die Batteriezellen aufzunehmen; und
einen Pufferteil, dazu ausgelegt, die Batteriezellen zu umgeben und in dem Gehäuse angeordnet zu sein,
wobei der Pufferteil eine härtbare Harzzusammensetzung umfasst,
die härtbare Harzzusammensetzung ein Polymer auf Siliconbasis; einen Härtungskatalysator; ein Vernetzungsmittel; und einen hohlen Füllstoff umfasst,
die härtbare Harzzusammensetzung eine Härtungsrate von 10 MPa·s/min bis 70 MPa·s/min bei 23 °C aufweist, bestimmt wie in der Beschreibung beschrieben,
und
die härtbare Harzzusammensetzung eine Härtungsrate von 400 MPa·s/min bis 2000 MPa·s/min bei 70 °C aufweist, bestimmt wie in der Beschreibung beschrieben,
wobei die härtbare Harzzusammensetzung ausgewählt ist aus elf Gemischen einer ersten härtbaren Harzzusammensetzung mit dem entsprechenden zweiten härtbaren Harzgemisch in einem Gewichtsverhältnis von 1:1, wobei
die ersten härtbaren Harzzusammensetzungen in der folgenden Tabelle 1 zusammengefasst sind und
die entsprechenden zweiten härtbaren Harzzusammensetzungen sind in der folgenden Tabelle 2 zusammengefasst sind,
**[Tabelle 1]**
| Klassifizierung | A (Gewich tsteile ) | B (Gewich tsteile ) | C-1 (Gewich tsteile ) | C-2 (Gewich tsteile ) | F (Gewich tsteile ) | G (Gewich tsteile ) |
|---|---|---|---|---|---|---|
| Beispiel 1 | 35 | 2 | 2 | 50 | 9 | 2 |
| Beispiel 2 | 35 | 2 | 2 | 50 | 9 | 2 |
| Beispiel 3 | 35 | 2 | 2 | 50 | 9 | 2 |
| Beispiel 4 | 35 | 2 | 2 | 50 | 9 | 2 |
| Beispiel 5 | 35 | 2 | 2 | 50 | 9 | 2 |
| Beispiel 6 | 35 | 2 | 2 | 50 | 9 | 2 |
| Beispiel 7 | 37 | 2 | 2 | 50 | 7 | 2 |
| Beispiel 8 | 36 | 2 | 2 | 48 | 10 | 2 |
| Beispiel 9 | 36 | 2 | 2 | 49 | 9 | 2 |
| Beispiel 10 | 36 | 2 | 3 | 48 | 9 | 2 |
| Beispiel 11 | 35 | 2 | 5 | 47 | 9 | 2 |
**[Tabelle 2]**
| Klassifizierung | A (Gewichtst eile) | D (Gewichts teile) | E (Gewichtst eile) | F (Gewichts teile) |
|---|---|---|---|---|
| Beispiel 1 | 90,6 | 0,3 | 0,1 | 9 |
| Beispiel 2 | 90,8 | 0,1 | 0,1 | 9 |
| Beispiel 3 | 90,78 | 0,12 | 0,1 | 9 |
| Beispiel 4 | 90,76 | 0,14 | 0,1 | 9 |
| Beispiel 5 | 90,74 | 0,16 | 0,1 | 9 |
| Beispiel 6 | 90,7 | 0,2 | 0,1 | 9 |
| Beispiel 7 | 72,8 | 0,1 | 0,1 | 7 |
| Beispiel 8 | 89,8 | 0,1 | 0,1 | 10 |
| Beispiel 9 | 90,65 | 0,25 | 0,1 | 9 |
| Beispiel 10 | 90,65 | 0,25 | 0,1 | 9 |
| Beispiel 11 | 90,65 | 0,25 | 0,1 | 9 |
| | | | | |
|---|---|---|---|---|
| In Tabelle 1 und 2 sind die Verbindungen: A: Polysiloxanverbindung, dargestellt durch die chemische Formel 4, und mit einer Viskosität von etwa 150 MPa·s bis etwa 220 MPa·s bei 23 °C, und enthaltend eine siliciumgebundene Alkenylgruppe, und B: Polysiloxanverbindung, dargestellt durch die chemische Formel 4, mit einer Viskosität von etwa 40000 MPa·s bis etwa 50000 MPa·s bei 23 °C, und enthaltend eine siliciumgebundene Alkenylgruppe 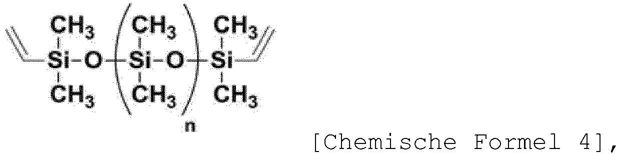 und C-1: Wasserstoffpolysiloxanverbindung, dargestellt durch die chemische Formel 8, mit einer Viskosität von etwa 150 MPa·s bis etwa 250 MPa·s bei 23 °C und mit einer Wasserstoffgruppe an eine Seitenkette davon gebunden 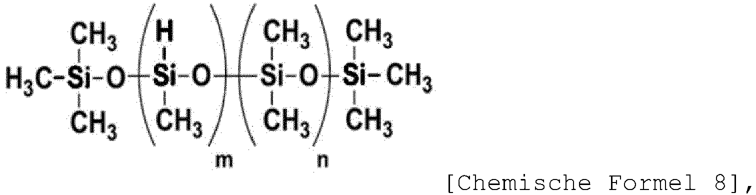 und C-2: Wasserstoffpolysiloxanverbindung, dargestellt durch die chemische Formel 6, mit einer Viskosität von etwa 60 MPa·s bis etwa 90 MPa·s bei 23 °C und mit einer Wasserstoffgruppe an ein Ende davon gebunden 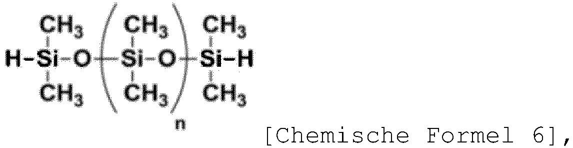 und D: Platin-Divinyltetramethyldisiloxan-Komplex, und E: 1-Ethinyl-1-cyclohexanol, und F: Glasblase (3M, Glasblase K15, Dichte 0,15 g/cm3), und G: Farbpigment (ELASTOSIL^{®} COLOR PASTE FL ULTRAMARINE BLUE RAL 5002). | | | | |

3. Härtbare Harzzusammensetzung zur Herstellung eines Batteriemoduls, wobei die härtbare Harzzusammensetzung umfasst:
ein Polymer auf Siliconbasis;
einen Härtungskatalysator;
ein Vernetzungsmittel; und
einen hohlen Füllstoff,
wobei die härtbare Harzzusammensetzung eine erste Härtungsrate von 10 MPa·s/min bis 70 MPa·s/min bei 23 °C aufweist, bestimmt wie in der Beschreibung beschrieben, und
die härtbare Harzzusammensetzung eine zweite Härtungsrate von 400 MPa·s/min bis 2000 MPa·s/min bei 70 °C aufweist, bestimmt wie in der Beschreibung beschrieben,
wobei die härtbare Harzzusammensetzung ausgewählt ist aus elf Gemischen einer ersten härtbaren Harzzusammensetzung mit dem entsprechenden zweiten härtbaren Harzgemisch in einem Gewichtsverhältnis von 1:1, wobei
die ersten härtbaren Harzzusammensetzungen in der folgenden Tabelle 1 zusammengefasst sind und
die entsprechenden zweiten härtbaren Harzzusammensetzungen sind in der folgenden Tabelle 2 zusammengefasst sind,
**[Tabelle 1]**
| Klassifizierung | A (Gewich tsteile ) | B (Gewich tsteile ) | C-1 (Gewich tsteile ) | C-2 (Gewich tsteile ) | F (Gewich tsteile ) | G (Gewich tsteile ) |
|---|---|---|---|---|---|---|
| Beispiel 1 | 35 | 2 | 2 | 50 | 9 | 2 |
| Beispiel 2 | 35 | 2 | 2 | 50 | 9 | 2 |
| Beispiel 3 | 35 | 2 | 2 | 50 | 9 | 2 |
| Beispiel 4 | 35 | 2 | 2 | 50 | 9 | 2 |
| Beispiel 5 | 35 | 2 | 2 | 50 | 9 | 2 |
| Beispiel 6 | 35 | 2 | 2 | 50 | 9 | 2 |
| Beispiel 7 | 37 | 2 | 2 | 50 | 7 | 2 |
| Beispiel 8 | 36 | 2 | 2 | 48 | 10 | 2 |
| Beispiel 9 | 36 | 2 | 2 | 49 | 9 | 2 |
| Beispiel 10 | 36 | 2 | 3 | 48 | 9 | 2 |
| Beispiel 11 | 35 | 2 | 5 | 47 | 9 | 2 |
**[Tabelle 2]**
| Klassifizierung | A (Gewichtst eile) | D (Gewichtst eile) | E (Gewichtst eile) | F (Gewichtst eile) |
|---|---|---|---|---|
| Beispiel 1 | 90,6 | 0,3 | 0,1 | 9 |
| Beispiel 2 | 90,8 | 0,1 | 0,1 | 9 |
| Beispiel 3 | 90,78 | 0,12 | 0,1 | 9 |
| Beispiel 4 | 90,76 | 0,14 | 0,1 | 9 |
| Beispiel 5 | 90,74 | 0,16 | 0,1 | 9 |
| Beispiel 6 | 90,7 | 0,2 | 0,1 | 9 |
| Beispiel 7 | 72,8 | 0,1 | 0,1 | 7 |
| Beispiel 8 | 89,8 | 0,1 | 0,1 | 10 |
| Beispiel 9 | 90,65 | 0,25 | 0,1 | 9 |
| Beispiel 10 | 90,65 | 0,25 | 0,1 | 9 |
| Beispiel 11 | 90,65 | 0,25 | 0,1 | 9 |
| | | | | |
|---|---|---|---|---|
| In Tabelle 1 und 2 sind die Verbindungen: A: Polysiloxanverbindung, dargestellt durch die chemische Formel 4, und mit einer Viskosität von etwa 150 MPa·s bis etwa 220 MPa·s bei 23 °C, und enthaltend eine siliciumgebundene Alkenylgruppe, und B: Polysiloxanverbindung, dargestellt durch die chemische Formel 4, mit einer Viskosität von etwa 40000 MPa·s bis etwa 50000 MPa·s bei 23 °C, und enthaltend eine siliciumgebundene Alkenylgruppe 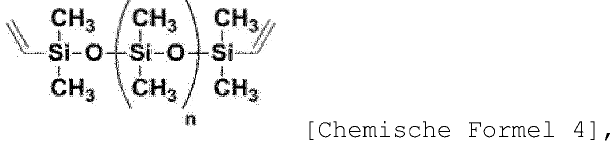 und C-1: Wasserstoffpolysiloxanverbindung, dargestellt durch die chemische Formel 8, mit einer Viskosität von etwa 150 MPa·s bis etwa 250 MPa·s bei 23 °C und mit einer Wasserstoffgruppe an eine Seitenkette davon gebunden 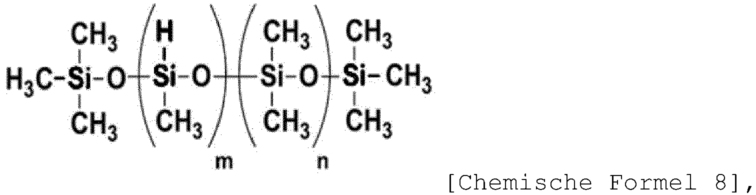 und C-2: Wasserstoffpolysiloxanverbindung, dargestellt durch die chemische Formel 6, mit einer Viskosität von etwa 60 MPa·s bis etwa 90 MPa·s bei 23 °C und mit einer Wasserstoffgruppe an ein Ende davon gebunden 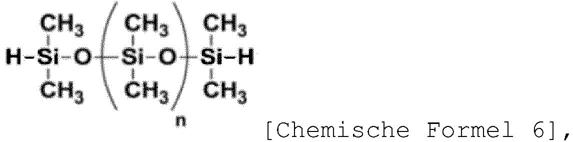 und D: Platin-Divinyltetramethyldisiloxan-Komplex, und E: 1-Ethinyl-1-cyclohexanol, und F: Glasblase (3M, Glasblase K15, Dichte 0,15 g/cm3), und G: Farbpigment (ELASTOSIL^{®} COLOR PASTE FL ULTRAMARINE BLUE RAL 5002). | | | | |

4. Härtbare Harzzusammensetzung nach Anspruch 3, wobei die härtbare Harzzusammensetzung eine Viskosität von 500 MPa·s bis 1200 MPa·s bei 23 °C aufweist.

5. Härtbare Harzzusammensetzung nach Anspruch 4, wobei die härtbare Harzzusammensetzung eine Viskosität von 400 MPa·s bis 1100 MPa·s bei 70 °C aufweist.

6. Härtbare Harzzusammensetzung nach Anspruch 3, wobei ein Verhältnis der zweiten Härtungsrate relativ zu der ersten Härtungsrate 10 bis 60 beträgt.

7. Härtbare Harzzusammensetzung nach Anspruch 3, wobei eine Kegelpenetration der härtbaren Harzzusammensetzung, gemessen gemäß einem nachstehenden Messverfahren, 20 1/10 mm bis 50 1/10 mm beträgt:
[Messverfahren]
die härtbare Harzzusammensetzung wird gemischt und 3 Stunden bei 25 °C gehärtet, um einen Harzblock auf Siliconbasis mit einem Durchmesser von 60 mm und einer Höhe von 70 mm herzustellen, und eine Eindringtiefe des Harzblocks auf Siliconbasis wird nach ISO 2137 unter Verwendung eines 9,38 g-Hohlkegels gemessen.

8. Härtbare Harzzusammensetzung nach Anspruch 3, wobei ein Kontaktwinkel der härtbaren Harzzusammensetzung, gemessen gemäß einem nachstehenden Messverfahren, 10° bis 30° beträgt:
[Messverfahren]
die härtbare Harzzusammensetzung wird in einem Volumen von 10 ml tropfenweise auf eine Glasplatte gegeben und nach fünf Sekunden wird ein Kontaktwinkel zwischen der Glasplatte und der härtbaren Harzzusammensetzung gemessen.

9. Härtbare Harzzusammensetzung nach Anspruch 9, wobei eine Kontaktwinkelverringerungsrate der härtbaren Harzzusammensetzung, gemessen gemäß einem nachstehenden Messverfahren, 5°/sec bis 15°/sec beträgt:
[Messverfahren]
die härtbare Harzzusammensetzung wird in dem Volumen tropfenweise auf die Glasplatte gegeben und nach 0,25 Sekunden wird ein Kontaktwinkel zwischen der Glasplatte und der härtbaren Harzzusammensetzung gemessen, wobei die Kontaktwinkelverringerungsrate ein Wert ist, der durch Teilen einer Differenz zwischen dem Kontaktwinkel bei 0,25 Sekunden und dem Kontaktwinkel bei 5 Sekunden durch 4,75 Sekunden erhalten wird.

10. Härtbare Harzzusammensetzung zur Herstellung eines Batteriemoduls, wobei die härtbare Harzzusammensetzung umfasst:
eine erste Siliconharzzusammensetzung, die ein erstes organisches Polysiloxan, ein Vernetzungsmittel und einen Kettenverlängerer umfasst; und
eine zweite Siliconharzzusammensetzung, die ein zweites organisches Polysiloxan, einen Härtungskatalysator und einen Reaktionsinhibitor umfasst,
wobei die erste Siliconharzzusammensetzung und/oder die zweite Siliconharzzusammensetzung ein Hohlkügelchen umfasst, und
wenn die erste Siliconharzzusammensetzung und die zweite Siliconharzzusammensetzung gemischt und gehärtet werden, bei 23 °C die härtbare Harzzusammensetzung eine erste Härtungsrate von 10 MPa·s/min bis 70 MPa·s/min aufweist, bestimmt wie in der Beschreibung beschrieben, und
bei 70 °C die härtbare Harzzusammensetzung eine zweite Härtungsrate von 400 MPa·s/min bis 2000 MPa aufweist, bestimmt wie in der Beschreibung beschrieben,
wobei die härtbare Harzzusammensetzung ausgewählt ist aus elf Gemischen einer ersten härtbaren Harzzusammensetzung mit dem entsprechenden zweiten härtbaren Harzgemisch in einem Gewichtsverhältnis von 1:1, wobei
die ersten härtbaren Harzzusammensetzungen in der folgenden Tabelle 1 zusammengefasst sind und
die entsprechenden zweiten härtbaren Harzzusammensetzungen sind in der folgenden Tabelle 2 zusammengefasst sind,
**[Tabelle 1]**
| Klassifizierung | A (Gewich tsteile ) | B (Gewich tsteile ) | C-1 (Gewich tsteile ) | C-2 (Gewich tsteile ) | F (Gewich tsteile ) | G (Gewich tsteile ) |
|---|---|---|---|---|---|---|
| Beispiel 1 | 35 | 2 | 2 | 50 | 9 | 2 |
| Beispiel 2 | 35 | 2 | 2 | 50 | 9 | 2 |
| Beispiel 3 | 35 | 2 | 2 | 50 | 9 | 2 |
| Beispiel 4 | 35 | 2 | 2 | 50 | 9 | 2 |
| Beispiel 5 | 35 | 2 | 2 | 50 | 9 | 2 |
| Beispiel 6 | 35 | 2 | 2 | 50 | 9 | 2 |
| Beispiel 7 | 37 | 2 | 2 | 50 | 7 | 2 |
| Beispiel 8 | 36 | 2 | 2 | 48 | 10 | 2 |
| Beispiel 9 | 36 | 2 | 2 | 49 | 9 | 2 |
| Beispiel 10 | 36 | 2 | 3 | 48 | 9 | 2 |
| Beispiel 11 | 35 | 2 | 5 | 47 | 9 | 2 |
**[Tabelle 2]**
| Klassifizierung | A (Gewichts teile) | D (Gewichtst eile) | E (Gewichtst eile) | F (Gewichtst eile) |
|---|---|---|---|---|
| Beispiel 1 | 90,6 | 0,3 | 0,1 | 9 |
| Beispiel 2 | 90,8 | 0,1 | 0,1 | 9 |
| Beispiel 3 | 90,78 | 0,12 | 0,1 | 9 |
| Beispiel 4 | 90,76 | 0,14 | 0,1 | 9 |
| Beispiel 5 | 90,74 | 0,16 | 0,1 | 9 |
| Beispiel 6 | 90,7 | 0,2 | 0,1 | 9 |
| Beispiel 7 | 72,8 | 0,1 | 0,1 | 7 |
| Beispiel 8 | 89,8 | 0,1 | 0,1 | 10 |
| Beispiel 9 | 90,65 | 0,25 | 0,1 | 9 |
| Beispiel 10 | 90,65 | 0,25 | 0,1 | 9 |
| Beispiel 11 | 90,65 | 0,25 | 0,1 | 9 |
| | | | | |
|---|---|---|---|---|
| In Tabelle 1 und 2 sind die Verbindungen: A: Polysiloxanverbindung, dargestellt durch die chemische Formel 4, und mit einer Viskosität von etwa 150 MPa·s bis etwa 220 MPa·s bei 23 °C, und enthaltend eine siliciumgebundene Alkenylgruppe, und B: Polysiloxanverbindung, dargestellt durch die chemische Formel 4, mit einer Viskosität von etwa 40000 MPa·s bis etwa 50000 MPa·s bei 23 °C, und enthaltend eine siliciumgebundene Alkenylgruppe 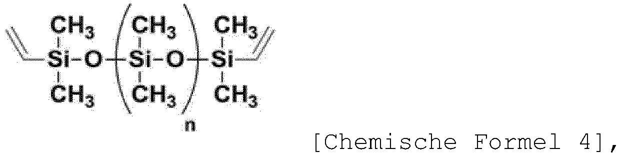 und C-1: Wasserstoffpolysiloxanverbindung, dargestellt durch die chemische Formel 8, mit einer Viskosität von etwa 150 MPa·s bis etwa 250 MPa·s bei 23 °C und mit einer Wasserstoffgruppe an eine Seitenkette davon gebunden 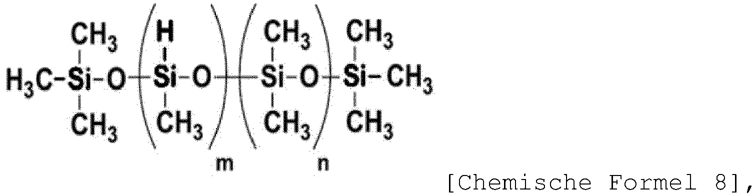 und C-2: Wasserstoffpolysiloxanverbindung, dargestellt durch die chemische Formel 6, mit einer Viskosität von etwa 60 MPa·s bis etwa 90 MPa·s bei 23 °C und mit einer Wasserstoffgruppe an ein Ende davon gebunden 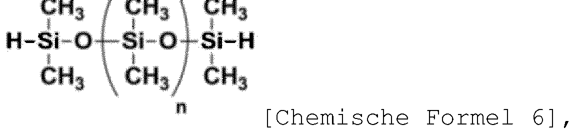 und D: Platin-Divinyltetramethyldisiloxan-Komplex, und E: 1-Ethinyl-1-cyclohexanol, und F: Glasblase (3M, Glasblase K15, Dichte 0,15 g/cm3), und G: Farbpigment (ELASTOSIL^{®} COLOR PASTE FL ULTRAMARINE BLUE RAL 5002). | | | | |

## Revendications

1. Procédé de fabrication d'un module de batterie, le procédé comprenant :
la préparation d'un boîtier configuré pour y recevoir une pluralité de cellules de batterie ;
le remplissage d'une composition de résine durcissable dans le boîtier ; et
le durcissement d'une partie de la composition de résine durcissable pour former des pièces de coiffage,
dans lequel la composition de résine durcissable comprend un polymère à base de silicone ; un catalyseur de durcissement ; un agent de réticulation ; et une charge creuse,
la composition de résine durcissable possède une vitesse de durcissement de 10 mPa·s/min à 70 mPa·s/min à 23 °C, déterminée comme décrit dans la description,
et
la composition de résine durcissable possède une vitesse de durcissement de 400 mPa·s/min à 2 000 mPa·s/min à 70 °C, déterminée comme décrit dans la description,
dans lequel la composition de résine durcissable est choisie parmi onze mélanges d'une première composition de résine durcissable avec le second mélange de résine durcissable correspondant en un rapport pondéral de 1:1, dans lequel
les premières compositions de résine durcissable sont résumées dans le tableau 1 suivant et
les deuxièmes compositions de résine durcissable correspondantes sont résumées dans le tableau 2 suivant,
**[ Tableau 1]**
| Classification | A (parties en poids) | B (parties en poids) | C-1 (parties en poids) | C-2 (parties en poids) | F (parties en poids) | G (parties en poids) |
|---|---|---|---|---|---|---|
| Exemple 1 | 35 | 2 | 2 | 50 | 9 | 2 |
| Exemple 2 | 35 | 2 | 2 | 50 | 9 | 2 |
| Exemple 3 | 35 | 2 | 2 | 50 | 9 | 2 |
| Exemple 4 | 35 | 2 | 2 | 50 | 9 | 2 |
| Exemple 5 | 35 | 2 | 2 | 50 | 9 | 2 |
| Exemple 6 | 35 | 2 | 2 | 50 | 9 | 2 |
| Exemple 7 | 37 | 2 | 2 | 50 | 7 | 2 |
| Exemple 8 | 36 | 2 | 2 | 48 | 10 | 2 |
| Exemple 9 | 36 | 2 | 2 | 49 | 9 | 2 |
| Exemple 10 | 36 | 2 | 3 | 48 | 9 | 2 |
| Exemple 11 | 35 | 2 | 5 | 47 | 9 | 2 |
**[Tableau 2]**
| Classification | A (parties en poids) | D (parties en poids) | E (parties en poids) | F (parties en poids) |
|---|---|---|---|---|
| Exemple 1 | 90,6 | 0,3 | 0,1 | 9 |
| Exemple 2 | 90,8 | 0,1 | 0,1 | 9 |
| Exemple 3 | 90,78 | 0,12 | 0,1 | 9 |
| Exemple 4 | 90,76 | 0,14 | 0,1 | 9 |
| Exemple 5 | 90,74 | 0,16 | 0,1 | 9 |
| Exemple 6 | 90,7 | 0,2 | 0,1 | 9 |
| Exemple 7 | 72,8 | 0,1 | 0,1 | 7 |
| Exemple 8 | 89,8 | 0,1 | 0,1 | 10 |
| Exemple 9 | 90,65 | 0,25 | 0,1 | 9 |
| Exemple 10 | 90,65 | 0,25 | 0,1 | 9 |
| Exemple 11 | 90,65 | 0,25 | 0,1 | 9 |
| | | | | |
|---|---|---|---|---|
| dans les tableaux 1 et 2, les composés sont : A : Composé polysiloxane représenté par la formule chimique 4, et ayant une viscosité d'environ 150 mPa·s à environ 220 mPa·s à 23 °C, et comportant un groupe alcényle lié au silicium, et B : Composé polysiloxane représenté par la formule chimique 4, ayant une viscosité d'environ 40 000 mPa·s à environ 50 000 mPa·s à 23 °C, et comprenant un groupe alcényle lié au silicium 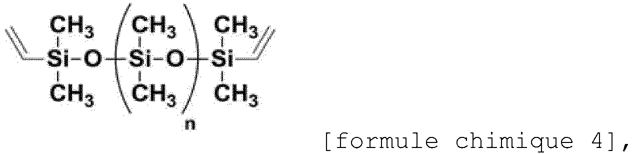 et C-1 : Composé hydrogénopolysiloxane représenté par la formule chimique 8, ayant une viscosité d'environ 150 mPa·s à environ 250 mPa·s à 23 °C, et ayant un groupe hydrogène lié à une chaîne latérale de celui-ci 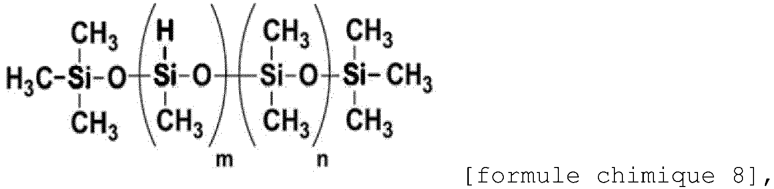 et C-2 : Composé hydrogénopolysiloxane représenté par la formule chimique 6, ayant une viscosité d'environ 60 mPa·s à environ 90 mPa·s à 23 °C, et ayant un groupe hydrogène lié à un groupe terminal de celui-ci, 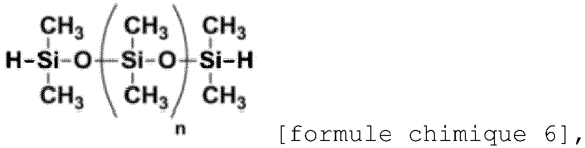 et D : Complexe de platine-divinyltétraméthyldisiloxane, et E : éthynyl-1-cyclohexanol-1, et F : Bulle de verre (3M, bulle de verre K15 masse volumique 0,15 g/cm3), et G : Pigment coloré (ELASTOSIL^{®} PÂTE DE COULEUR BLEU OUTREMER RAL 5002). | | | | |

2. Module de batterie, comprenant :
une pluralité de cellules de batteries ;
un boîtier configuré pour recevoir les cellules de batterie ; et
une partie tampon configurée pour entourer les cellules de batterie et disposée dans le boîtier,
dans lequel la partie tampon comprend une composition de résine durcissable,
la composition de résine durcissable comprend un polymère à base de silicone ; un catalyseur de durcissement ; un agent de réticulation ; et une charge creuse,
la composition de résine durcissable possède une vitesse de durcissement de 10 mPa·s/min à 70 mPa·s/min à 23 °C, déterminée comme décrit dans la description,
et
la composition de résine durcissable possède une vitesse de durcissement de 400 mPa·s/min à 2 000 mPa·s/min à 70 °C, déterminée comme décrit dans la description,
dans lequel la composition de résine durcissable est choisie parmi onze mélanges d'une première composition de résine durcissable avec le second mélange de résine durcissable correspondant en un rapport pondéral de 1:1, dans lequel
les premières compositions de résine durcissable sont résumées dans le tableau 1 suivant et
les deuxièmes compositions de résine durcissable correspondantes sont résumées dans le tableau 2 suivant,
**[Tableau 1]**
| Classification | A (parties en poids) | B (parties en poids) | C-1 (parties en poids) | C-2 (parties en poids) | F (parties en poids) | G (parties en poids) |
|---|---|---|---|---|---|---|
| Exemple 1 | 35 | 2 | 2 | 50 | 9 | 2 |
| Exemple 2 | 35 | 2 | 2 | 50 | 9 | 2 |
| Exemple 3 | 35 | 2 | 2 | 50 | 9 | 2 |
| Exemple 4 | 35 | 2 | 2 | 50 | 9 | 2 |
| Exemple 5 | 35 | 2 | 2 | 50 | 9 | 2 |
| Exemple 6 | 35 | 2 | 2 | 50 | 9 | 2 |
| Exemple 7 | 37 | 2 | 2 | 50 | 7 | 2 |
| Exemple 8 | 36 | 2 | 2 | 48 | 10 | 2 |
| Exemple 9 | 36 | 2 | 2 | 49 | 9 | 2 |
| Exemple 10 | 36 | 2 | 3 | 48 | 9 | 2 |
| Exemple 11 | 35 | 2 | 5 | 47 | 9 | 2 |
**[Tableau 2]**
| Classification | A (parties en poids) | D (parties en poids) | E (parties en poids) | F (parties en poids) |
|---|---|---|---|---|
| Exemple 1 | 90, 6 | 0,3 | 0, 1 | 9 |
| Exemple 2 | 90,8 | 0,1 | 0, 1 | 9 |
| Exemple 3 | 90,78 | 0,12 | 0, 1 | 9 |
| Exemple 4 | 90,76 | 0,14 | 0, 1 | 9 |
| Exemple 5 | 90, 74 | 0,16 | 0, 1 | 9 |
| Exemple 6 | 90, 7 | 0,2 | 0, 1 | 9 |
| Exemple 7 | 72,8 | 0,1 | 0,1 | 7 |
| Exemple 8 | 89,8 | 0,1 | 0, 1 | 10 |
| Exemple 9 | 90, 65 | 0,25 | 0, 1 | 9 |
| Exemple 10 | 90, 65 | 0,25 | 0, 1 | 9 |
| Exemple 11 | 90, 65 | 0,25 | 0, 1 | 9 |
| | | | | |
|---|---|---|---|---|
| dans les tableaux 1 et 2, les composés sont : A : Composé polysiloxane représenté par la formule chimique 4, et ayant une viscosité d'environ 150 mPa·s à environ 220 mPa·s à 23 °C, et comportant un groupe alcényle lié au silicium, et B : Composé polysiloxane représenté par la formule chimique 4, ayant une viscosité d'environ 40 000 mPa·s à environ 50 000 mPa·s à 23 °C, et comprenant un groupe alcényle lié au silicium 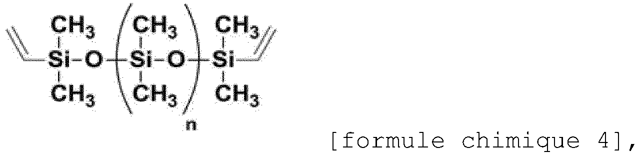 et C-1 : Composé hydrogénopolysiloxane représenté par la formule chimique 8, ayant une viscosité d'environ 150 mPa·s à environ 250 mPa·s à 23 °C, et ayant un groupe hydrogène lié à une chaîne latérale de celui-ci 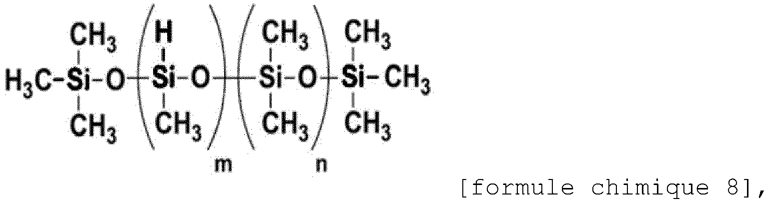 et C-2 : Composé hydrogénopolysiloxane représenté par la formule chimique 6, ayant une viscosité d'environ 60 mPa·s à environ 90 mPa·s à 23 °C, et ayant un groupe hydrogène lié à un groupe terminal de celui-ci, 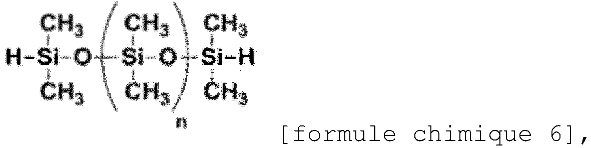 et D : Complexe de platine-divinyltétraméthyldisiloxane, et E : éthynyl-1-cyclohexanol-1, et F : Bulle de verre (3M, bulle de verre K15 masse volumique 0,15 g/cm3), et G : Pigment coloré (ELASTOSIL^{®} PÂTE DE COULEUR BLEU OUTREMER RAL 5002). | | | | |

3. Composition de résine durcissable pour la fabrication d'un module de batterie, la composition de résine durcissable comprenant :
un polymère à base de silicone ;
un catalyseur de durcissement ;
un agent de réticulation ; et
une charge creuse,
la composition de résine durcissable ayant une première vitesse de durcissement de 10 mPa·s/min à 70 mPa·s/min à 23 °C, déterminée comme décrit dans la description, et
la composition de résine durcissable ayant une deuxième vitesse de durcissement de 400 mPa·s/min à 2 000 mPa·s/min à 70 °C, déterminée comme décrit dans la description,
dans lequel la composition de résine durcissable est choisie parmi onze mélanges d'une première composition de résine durcissable avec le second mélange de résine durcissable correspondant en un rapport pondéral de 1:1, dans lequel
les premières compositions de résine durcissable sont résumées dans le tableau 1 suivant et
les deuxièmes compositions de résine durcissable correspondantes sont résumées dans le tableau 2 suivant,
**[Tableau 1]**
| Classificati on | A (partie s en poids) | B (partie s en poids) | C-1 (partie s en poids) | C-2 (partie s en poids) | F (partie s en poids) | G (partie s en poids) |
|---|---|---|---|---|---|---|
| Exemple 1 | 35 | 2 | 2 | 50 | 9 | 2 |
| Exemple 2 | 35 | 2 | 2 | 50 | 9 | 2 |
| Exemple 3 | 35 | 2 | 2 | 50 | 9 | 2 |
| Exemple 4 | 35 | 2 | 2 | 50 | 9 | 2 |
| Exemple 5 | 35 | 2 | 2 | 50 | 9 | 2 |
| Exemple 6 | 35 | 2 | 2 | 50 | 9 | 2 |
| Exemple 7 | 37 | 2 | 2 | 50 | 7 | 2 |
| Exemple 8 | 36 | 2 | 2 | 48 | 10 | 2 |
| Exemple 9 | 36 | 2 | 2 | 49 | 9 | 2 |
| Exemple 10 | 36 | 2 | 3 | 48 | 9 | 2 |
| Exemple 11 | 35 | 2 | 5 | 47 | 9 | 2 |
**[Tableau 2]**
| Classification | A (parties en poids) | D (parties en poids) | E (parties en poids) | F (parties en poids) |
|---|---|---|---|---|
| Exemple 1 | 90, 6 | 0,3 | 0,1 | 9 |
| Exemple 2 | 90, 8 | 0,1 | 0,1 | 9 |
| Exemple 3 | 90,78 | 0,12 | 0, 1 | 9 |
| Exemple 4 | 90,76 | 0, 14 | 0, 1 | 9 |
| Exemple 5 | 90,74 | 0,16 | 0, 1 | 9 |
| Exemple 6 | 90,7 | 0,2 | 0, 1 | 9 |
| Exemple 7 | 72,8 | 0,1 | 0, 1 | 7 |
| Exemple 8 | 89,8 | 0, 1 | 0, 1 | 10 |
| Exemple 9 | 90, 65 | 0,25 | 0, 1 | 9 |
| Exemple 10 | 90, 65 | 0,25 | 0, 1 | 9 |
| Exemple 11 | 90,65 | 0,25 | 0,1 | 9 |
| | | | | |
|---|---|---|---|---|
| dans les tableaux 1 et 2, les composés sont : A : Composé polysiloxane représenté par la formule chimique 4, et ayant une viscosité d'environ 150 mPa·s à environ 220 mPa·s à 23 °C, et comportant un groupe alcényle lié au silicium, et B : Composé polysiloxane représenté par la formule chimique 4, ayant une viscosité d'environ 40 000 mPa·s à environ 50 000 mPa·s à 23 °C, et comprenant un groupe alcényle lié au silicium 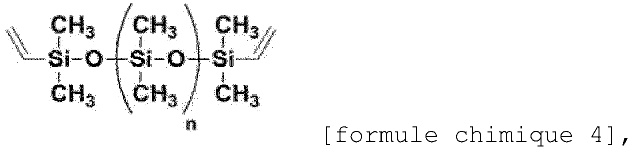 et C-1 : Composé hydrogénopolysiloxane représenté par la formule chimique 8, ayant une viscosité d'environ 150 mPa·s à environ 250 mPa·s à 23 °C, et ayant un groupe hydrogène lié à une chaîne latérale de celui-ci 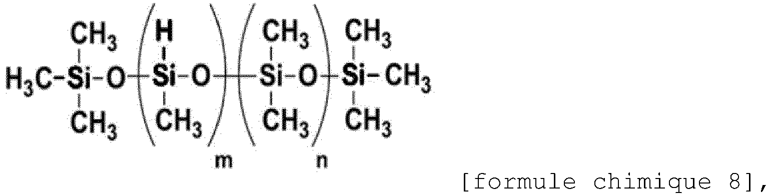 et C-2 : Composé hydrogénopolysiloxane représenté par la formule chimique 6, ayant une viscosité d'environ 60 mPa·s à environ 90 mPa·s à 23 °C, et ayant un groupe hydrogène lié à un groupe terminal de celui-ci, 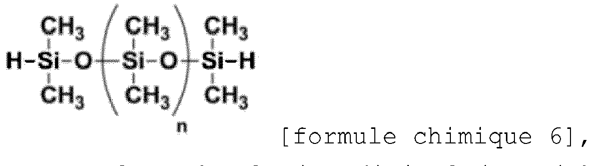 et D : Complexe de platine-divinyltétraméthyldisiloxane, et E : éthynyl-1-cyclohexanol-1, et F : Bulle de verre (3M, bulle de verre K15 masse volumique 0,15 g/cm3), et G : Pigment coloré (ELASTOSIL^{®} PÂTE DE COULEUR BLEU OUTREMER RAL 5002). | | | | |

4. Composition de résine durcissable selon la revendication 3, dans laquelle la composition de résine durcissable a une viscosité de 500 mPa·s à 1 200 mPa·s à 23 °C.

5. Composition de résine durcissable selon la revendication 4, dans laquelle la composition de résine durcissable a une viscosité de 400 mPa·s à 1 100 mPa·s à 70 °C.

6. Composition de résine durcissable selon la revendication 3, dans laquelle un rapport de la seconde vitesse de durcissement par rapport à la première vitesse de durcissement est de 10 à 60.

7. Composition de résine durcissable selon la revendication 3, dans laquelle une pénétration de cône de la composition de résine durcissable mesurée selon un procédé de mesure ci-dessous est de 20 1/10 mm à 50 1/10 mm :
[Procédé de mesure]
la composition de résine durcissable est mélangée et durcie à 25 °C pendant 3 heures pour fabriquer un bloc de résine à base de silicone ayant un diamètre de 60 mm et une hauteur de 70 mm, et une profondeur de pénétration du bloc de résine à base de silicone est mesurée selon la norme ISO 2137 en utilisant un cône creux de 9,38 g.

8. Composition de résine durcissable selon la revendication 3, dans laquelle un angle de contact de la composition de résine durcissable mesuré selon un procédé de mesure ci-dessous est de 10° à 30° :
[Procédé de mesure]
la composition de résine durcissable est ajoutée dans un volume de 10 ml goutte à goutte à une plaque de verre, et après cinq secondes, un angle de contact entre la plaque de verre et la composition de résine durcissable est mesuré.

9. Composition de résine durcissable selon la revendication 9, dans laquelle une vitesse de réduction d'angle de contact de la composition de résine durcissable mesurée selon un procédé de mesure ci-dessous est de 5 °/s à 15 °/s :
[Procédé de mesure]
la composition de résine durcissable est ajoutée dans le volume goutte à goutte à la plaque de verre, et après 0,25 seconde, un angle de contact entre la plaque de verre et la composition de résine durcissable est mesuré, la vitesse de réduction d'angle de contact étant une valeur obtenue en divisant une différence entre l'angle de contact à 0,25 seconde et l'angle de contact à 5 secondes par 4,75 secondes.

10. Composition de résine durcissable pour la fabrication d'un module de batterie, la composition de résine durcissable comprenant :
une première composition de résine siliconée comprenant un premier polysiloxane organique, un agent de réticulation et un extenseur de chaîne ; et
une deuxième composition de résine silicone comprenant un deuxième polysiloxane organique, un catalyseur de durcissement et un inhibiteur de réaction,
dans laquelle au moins l'une parmi la première composition de résine de silicone et la deuxième composition de résine de silicone comprend une bille creuse, et
lorsque la première composition de résine de silicone et la deuxième composition de résine de silicone sont mélangées et durcies,
à 23 °C, la composition de résine durcissable possède une première vitesse de durcissement de 10 mPa·s/min à 70 mPa·s/min, déterminée comme décrit dans la description, et
à 70 °C, la composition de résine durcissable possède une deuxième vitesse de durcissement de 400 mPa·s/min à 2 000 mPa, déterminée comme décrit dans la description, dans lequel la composition de résine durcissable est choisie parmi onze mélanges d'une première composition de résine durcissable avec le second mélange de résine durcissable correspondant en un rapport pondéral de 1:1, dans lequel
les premières compositions de résine durcissable sont résumées dans le tableau 1 suivant et
les deuxièmes compositions de résine durcissable correspondantes sont résumées dans le tableau 2 suivant,
**[Tableau 1]**
| Classificati on | A (partie s en poids) | B (partie s en poids) | C-1 (partie s en poids) | C-2 (partie s en poids) | F (partie s en poids) | G (partie s en poids) |
|---|---|---|---|---|---|---|
| Exemple 1 | 35 | 2 | 2 | 50 | 9 | 2 |
| Exemple 2 | 35 | 2 | 2 | 50 | 9 | 2 |
| Exemple 3 | 35 | 2 | 2 | 50 | 9 | 2 |
| Exemple 4 | 35 | 2 | 2 | 50 | 9 | 2 |
| Exemple 5 | 35 | 2 | 2 | 50 | 9 | 2 |
| Exemple 6 | 35 | 2 | 2 | 50 | 9 | 2 |
| Exemple 7 | 37 | 2 | 2 | 50 | 7 | 2 |
| Exemple 8 | 36 | 2 | 2 | 48 | 10 | 2 |
| Exemple 9 | 36 | 2 | 2 | 49 | 9 | 2 |
| Exemple 10 | 36 | 2 | 3 | 48 | 9 | 2 |
| Exemple 11 | 35 | 2 | 5 | 47 | 9 | 2 |
**[Tableau 2]**
| Classification | A (parties en poids) | D (parties en poids) | E (parties en poids) | F (parties en poids) |
|---|---|---|---|---|
| Exemple 1 | 90,6 | 0,3 | 0,1 | 9 |
| Exemple 2 | 90,8 | 0,1 | 0,1 | 9 |
| Exemple 3 | 90,78 | 0,12 | 0,1 | 9 |
| Exemple 4 | 90,76 | 0,14 | 0,1 | 9 |
| Exemple 5 | 90,74 | 0,16 | 0,1 | 9 |
| Exemple 6 | 90,7 | 0,2 | 0, 1 | 9 |
| Exemple 7 | 72,8 | 0, 1 | 0, 1 | 7 |
| Exemple 8 | 89,8 | 0, 1 | 0, 1 | 10 |
| Exemple 9 | 90, 65 | 0,25 | 0, 1 | 9 |
| Exemple 10 | 90, 65 | 0,25 | 0, 1 | 9 |
| Exemple 11 | 90, 65 | 0,25 | 0, 1 | 9 |
| | | | | |
|---|---|---|---|---|
| dans les tableaux 1 et 2, les composés sont : A : Composé polysiloxane représenté par la formule chimique 4, et ayant une viscosité d'environ 150 mPa·s à environ 220 mPa·s à 23 °C, et comportant un groupe alcényle lié au silicium, et B : Composé polysiloxane représenté par la formule chimique 4, ayant une viscosité d'environ 40 000 mPa·s à environ 50 000 mPa·s à 23 °C, et comprenant un groupe alcényle lié au silicium 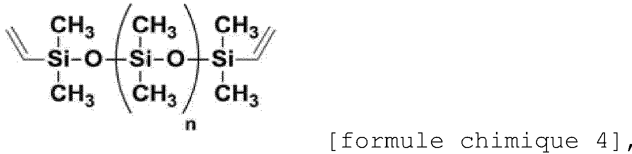 et formule chimique 8, ayant une viscosité d'environ 150 mPa·s à environ 250 mPa·s à 23 °C, et ayant un groupe hydrogène lié à une chaîne latérale de celui-ci 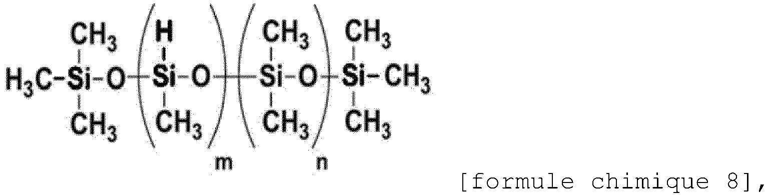 et C-2 : Composé hydrogénopolysiloxane représenté par la formule chimique 6, ayant une viscosité d'environ 60 mPa·s à environ 90 mPa·s à 23 °C, et ayant un groupe hydrogène lié à un groupe terminal de celui-ci, 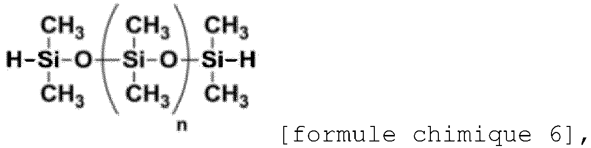 et D : Complexe de platine-divinyltétraméthyldisiloxane, et E : éthynyl-1-cyclohexanol-1, et F : Bulle de verre (3M, bulle de verre K15 masse volumique 0,15 g/cm3), et G : Pigment coloré (ELASTOSIL^{®} PÂTE DE COULEUR BLEU OUTREMER RAL 5002). | | | | |
C-1 : Composé hydrogénopolysiloxane représenté par la
